(19) Europäisches Patentamt / European Patent Office / Office européen des brevets

(11) **EP 2 855 193 B1**

(12) # EUROPÄISCHE PATENTSCHRIFT

(45) Veröffentlichungstag und Bekanntmachung des Hinweises auf die Patenterteilung:
**27.07.2016 Patentblatt 2016/30**

(21) Anmeldenummer: **13726711.8**

(22) Anmeldetag: **24.05.2013**

(51) Int Cl.:
**G01M 15/00** (2006.01)   **G01B 13/04** (2006.01)
**G01M 15/02** (2006.01)   **G01M 13/02** (2006.01)
**G05B 13/04** (2006.01)

(86) Internationale Anmeldenummer:
**PCT/EP2013/060716**

(87) Internationale Veröffentlichungsnummer:
**WO 2013/174967 (28.11.2013 Gazette 2013/48)**

(54) **VERFAHREN UND EINE VORRICHTUNG ZUR PRÜFUNG DES ANTRIEBSSTRANGES VON ZUMINDEST TEILWEISE ELEKTRISCH BETRIEBENEN FAHRZEUGEN**

METHOD AND DEVICE FOR TESTING THE DRIVE TRAIN OF VEHICLES DRIVEN AT LEAST PARTIALLY BY ELECTRICITY

PROCÉDÉ ET DISPOSITIF PERMETTANT DE CONTRÔLER LA CHAÎNE CINÉMATIQUE DE VÉHICULES À ENTRAÎNEMENT AU MOINS PARTIELLEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2012 AT 06102012**

(43) Veröffentlichungstag der Anmeldung:
**08.04.2015 Patentblatt 2015/15**

(73) Patentinhaber: **AVL List GmbH**
**8020 Graz (AT)**

(72) Erfinder:
• **KÖNIG, Oliver**
**A-8042 Graz (AT)**
• **JAKUBEK, Stefan**
**A-1230 Wien (AT)**
• **PROCHART, Günter**
**A-8042 Graz (AT)**
• **GSCHWEITL, Kurt**
**A-8063 Eggersdorf (AT)**
• **GREGORCIC, Gregor**
**8047 Graz (AT)**

(74) Vertreter: **Patentanwälte Pinter & Weiss OG**
**Prinz-Eugen-Straße 70**
**1040 Wien (AT)**

(56) Entgegenhaltungen:
**DE-A1-102009 034 555**

• **OLIVER KONIG ET AL: "Model predictive control of a battery emulator for testing of hybrid and electric powertrains", 2011 IEEE VEHICLE POWER AND PROPULSION CONFERENCE (VPPC 2011) : CHICAGO, ILLINOIS, USA, 6 - 9 SEPTEMBER 2011, IEEE, PISCATAWAY, NJ, 6. September 2011 (2011-09-06), Seiten 1-6, XP031974964, DOI: 10.1109/VPPC.2011.6043174 ISBN: 978-1-61284-248-6 in der Anmeldung erwähnt**

## EP 2 855 193 B1

**Beschreibung**

Die Erfindung betrifft ein Verfahren zum Testen des Antriebsstrangs von Fahrzeugen, die mindestens teilweise elektrisch angetrieben werden, wobei die am Antriebsstrang anliegende Spannung durch einen Regler gesteuert wird, der mit einem Simulationssystem für das Energiespeichersystem auf eine Weise gekoppelt ist, dass die Spannung wie bei einem physischen Energiespeichersystem dynamisch wirkt, sowie mit einer Einrichtung zur Ausführung dieses Verfahrens.

Die Entwicklung von Hybridfahrzeugen (HEV) und Elektrofahrzeugen (EV) ist eine komplexe Aufgabe, die zahlreiche neue Technologien einbezieht, die zuvor noch nicht in der Automobilindustrie eingesetzt wurden. Die Beherrschung dieser Aufgabe erfordert ein frühes Testen individueller Komponenten, um Probleme rechtzeitig zu erkennen und eine nahtlose Integration sicherzustellen. Komponenten haben untereinander jedoch Wechselbeziehungen, sodass ein isoliertes Testen ohne einen geeigneten Prüfstand, der diese Wechselbeziehungen emulieren kann, unmöglich ist. Für jede Komponente ist eine individuelle Umgebung erforderlich, die den künftigen Einsatzbedingungen so weit wie möglich entspricht. Ein Antriebsstrang, der einen oder mehrere Elektromotor(en) enthält, erfordert nicht nur eine mechanische, sondern auch eine elektrische Testumgebung. Ein wichtiger Teil der elektrischen Umgebung ist die Traktionsbatterie. Das Testen mit einer reellen Batterie erfordert eine zeitaufwendige Vorkonditionierung der Batterie, um definierte Betriebsbedingungen für den Antriebsstrang zu erzielen. Zusätzlich verhindert die Batteriealterung eine deterministische Wiederholung von Testläufen. Zudem ist es häufig wünschenswert, den Antriebsstrang so früh wie möglich zu testen, wenn eine geeignete Batterie möglicherweise noch nicht verfügbar ist. Diesen Herausforderungen lässt sich durch die Verwendung eines Batterieemulators (BE) begegnen, der durch die Emulation der elektrischen Eigenschaften als Ersatz für die Traktionsbatterie fungiert. Diese Eigenschaften werden normalerweise durch die Verwendung eines mehr oder weniger komplexen Batteriemodells simuliert. Eine programmierbare Gleichspannungsversorgung reproduziert die simulierte Batteriespannung an ihren Ausgangsanschlüssen und versorgt den Antriebsstrang mit dem erforderlichen Strom. Der gemessene Ladestrom wird in das Simulationsmodell zurückgespeist, um den Zustand der virtuellen Batterie zu aktualisieren. Wegen des Leistungsbedarfs von mehreren zehn oder hundert Kilowatt muss statt einer linearen Stromversorgung ein DC-DC-Wandler verwendet werden. Die Zeitkonstanten der elektrochemischen Prozesse im Innern der Batterie sind normalerweise im Vergleich zu denen der Leistungselektronik und des elektrischen Antriebsstrangs langsam. Wegen der Kapazitäten aufgrund von Doppelschichteffekten und ohmschem Widerstand und Induktivität von Verbindungen zwischen den Zellen kann sich die Anschlussspannung wegen Laststromtransienten dennoch sehr schnell ändern. Zum Beispiel bewirkt ein schrittweiser Anstieg des Laststroms einen sofortigen Abfall der Anschlussspannung. Es ist nicht ausreichend, die Spannung bei offenem Stromkreis einfach vom Batteriemodell zu reproduzieren; die interne Impedanz der Batterie muss emuliert werden. Demzufolge ist es erforderlich, einen Regler zu entwerfen, der eine schnelle Führungsregelung der Ausgangsspannung und eine effektive Störunterdrückung bei Änderung des Laststroms erreicht, sodass die Ausgangsimpedanz der Ausgangsstufe des Batterieemulators unterdrückt wird und die Impedanz vom Batteriemodell vorgegeben werden kann.

Zunehmende Nachfrage nach Emulation von Ultrakondensatorbatterien erhöht weiter die erforderliche Bandbreite, da sie eine schnellere Dynamik aufweisen als elektrochemische Batterien.

Während des Betriebs regelt der Traktionswechselrichter die vom elektrischen Antriebsmotor erzeugte Geschwindigkeit oder das Drehmoment. Änderungen der Anschlussspannung der Batterie werden durch den Regler kompensiert, sodass sich die Leistungsaufnahme des Wechselrichters nicht ändert. In der Literatur wird eine derartige Last üblicherweise als Konstantleistungslast (Constant Power Load, CPL) bezeichnet. Wenn eine CPL von einem DC-DC-Wandler statt von einer Batterie beaufschlagt wird, wird das System wegen der negativen Impedanz der CPL instabil. Dies ist bei kompakten Hochleistungs-Wechselrichtern in Automobilen besonders problematisch. Im Vergleich zu Wechselrichtern für industrielle Anwendungen haben Traktionswechselrichter normalerweise einen kleinen Zwischenkreiskondensator, der die Stabilitätsreserve reduziert. Als weitere Folge der sich ergebenden kleinen Filterkapazität werden Lasttransienten und Stromrippel zurück zur DC-Versorgung übertragen.

Für die Emulation der Stromversorgung gibt es zahlreiche Anwendungsgebiete. Zum Beispiel: "Model predictive control of a battery emulator for testing" [O. Konig et al] in 2011 IEEE Vehicle power and propulsion conference, Seiten 1-6, ISBN 978-1-61284-6. Die Emulation von Batterien ist auch hilfreich zum Testen von Geräten der Unterhaltungselektronik, wie dies zum Beispiel beschrieben ist in [P. H. Chou, C. Park, J. Park, K. Pham und J. Liu, "B#: a battery emulator and power profiling instrument," in ISLPED '03: Proceedings of the 2003 international symposium on Low power electronics and design. New York, NY, USA: ACM, 2003, S. 288-293]. Das Testen von Stromwechselrichtern von Brennstoffzellen kann wegen der begrenzten Verfügbarkeit von Brennstoffzellen-Prototypen und dem Risiko kostspieliger Schäden problematisch sein. Die Emulation von Brennstoffzellen kann daher vorteilhaft sein [A. Gebregergis und P. Pillay, "The development of solid oxide fuel cell (sofc) emulator," in Power Electronics Specialists Conference, 2007. PESC 2007. IEEE, 17-21 2007, S. 1232 -1238]. In beiden Dokumenten wird ein Linear-Leistungsverstärker verwendet, um das Modell der Stromquelle mit dem getesteten System zu verbinden. Obwohl derartige Verstärker über hohe Bandbreiten verfügen, sind sie wegen ihrer geringen Effizienz auf kleine Leistungspegel begrenzt. Ein weiteres wichtiges Anwendungsgebiet ist das Testen von Netzwechselrichtern für Fotovoltaiksysteme. In [M. C. Di Piazza und G. Vitale, "Photovoltaic field emulation including dynamic and partial shadow conditions," Applied Energy, vol. 87, no. 3, S. 814 - 823, 2010], ist ein Emulator für Fotovoltaikmodule auf der Grundlage eines DC-DC-Wandlers beschrieben. Eine Beschreibung eines Emulators für Starterbatterien für Automobile findet sich in [T. Baumhöfer, W. Waag und D. Sauer, "Specialized battery emulator for automotive electrical systems," in Vehicle Power and Propulsion Conference (VPPC), 2010 IEEE, Sept. 2010, S. 1 - 4].

Mit CPLs verbundene DC-DC-Wandler werden in mehreren Veröffentlichungen untersucht. Das Konzept der negativen Impedanzinstabilität wurde eingeführt durch [V. Grigore, J. Hatonen, J. Kyyra und T. Suntio, "Dynamics of a buck converter with a constant power load," in Power Electronics Specialists Conference, 1998. PESC 98 Record. 29th Annual IEEE, vol. 1, 17-22 1998, S. 72 -78 vol.1] und [B. Choi, B. Cho und S.-S. Hong, "Dynamics and control of dc-to-dc converters driving other converters downstream," Circuits and Systems I: Fundamental Theory and Applications, IEEE Transactions on, vol. 46, no. 10, S. 1240 -1248, Okt. 1999].

Die vorgeschlagenen Stabilisierungssteuerungsansätze reichen von der Feedback-Linearisierung in [J. Ciezki und R. Ashton, "The application of feedback linearization techniques to the stabilization of dc-to-dc converters with constant power loads," in Circuits and Systems, 1998. ISCAS '98. Proceedings of the 1998 IEEE International Symposium on, vol. 3, Mai-3. Juni 1998, S. 526 -529 vol.3] und [A. Emadi und M. Ehsani, "Negative impedance stabilizing controls for pwm dc-dc converters using feedback linearization techniques," in Energy Conversion Engineering Conference and Exhibit, 2000. (IECEC) 35th Intersociety, vol. 1, 2000, S. 613 -620 vol.1] über die Sliding-Mode-Regelung (SMC) in [A. Emadi, A. Khaligh, C. Rivetta und G. Williamson, "Constant power loads and negative impedance instability in automotive systems: definition, modeling, stability, and control of power electronic converters and motor drives," Vehicular Technology, IEEE Transactions on, vol. 5, no. 4, S. 1112 -1125, Juli 2006] bis zu passivitätsbasiertem PID-Design in [A. Kwasinski und P. Krein, "Passivity-based control of buck converters with constant-power loads," in Power Electronics Specialists Conference, 2007. PESC 2007. IEEE, 2007, S. 259 -265] 5 und aktiver Dämpfung in [A. Rahimi und A. Emadi, "Active damping in dc/dc power electronic converters: A novel method to overcome the problems of constant power loads," Industrial Electronics, IEEE Transactions on, vol. 56, no. 5, S. 1428 -1439, Mai 2009]. Modellprädiktive Regelung zur Stabilisierung von Energieversorgungsnetzen mit CPLs wird vorgeschlagen in [M. Zima und G. Andersson, "Model predictive control employing trajectory sensitivities for power systems applications," in Decision and Control, 2005 and 2005 European Control Conference. CDC-ECC '05. 44th IEEE Conference on, 2005, S. 4452 - 4456]. All diesen Ansätzen ist gemein, dass ein Stromversorgungswandler eine konstante Spannung für einen oder mehrere Wechselrichter bereitstellen muss, die als CPL fungieren. Die vorgeschlagenen Ansätze zum Reglerentwurf führen zu stabilen geschlossenen Regelkreisen, wobei jedoch die Führungsregelungen (falls überhaupt berücksichtigt) langsam sind und schwach gedämpfte Oszillationen aufweisen. Die hier vorgestellte Anwendung erfordert dagegen eine schnelle Führungsregelung.

Andere elektronische Stromwandler, die eine schnelle Führungsregelung erfordern, sind unterbrechungsfreie Stromversorgungen (UPS/USV), die eine Wechselspannung erzeugen. Die Periodizitätd der Wechselpannung kann ausgenutzt werden, um die Führungsregelung und das Störverhalten zu verbessern [K. Zhang, L. Peng, Y. Kang und J. Xiong, "State-feedback-withintegral control plus repetitive control for UPS inverters," in Twentieth Annual IEEE Applied Power Electronics Conference and Exposition, 2005. APEC 2005., no. 2. IEEE, 2005, S. 553-559]. Bei einem BE ist die Ausgangsspannung nicht periodisch, und sie richtet sich nach dem Laststrom über das Batteriemodell, sodass diese Ansätze nicht angewandt werden können.

Wegen der zunehmenden Rechenleistung von digitalen Controller-Plattformen und verbesserten Algorithmen ist die modellprädiktive Regelung (MPC) nicht mehr auf Systeme mit langsamer Dynamik beschränkt. Sie lässt sich jetzt auch bei Systemen anwenden, die hohe Abtastraten erfordern, wie z. B. bei leistungselektronischen Stromrichtern. Die Regelung von DC-DC-Wandlern mit MPC wird vorgeschlagen in [T. Geyer, G. Papafotiou und M. Morari, "On the optimal control of switch-mode dc-dc converters," Hybrid Systems: Computation and Control, S. 77-85, 2004] und experimentelle Ergebnisse werden gezeigt in [T. Geyer, G. Papafotiou, R. Frasca und M. Morari, "Constrained optimal control of the step-down dc-dc converter," Power Electronics, IEEE Transactions on, vol. 23, no. 5, S. 2454 -2464, Sept. 2008], wobei die sogenannte explizite MPC (eMPC) [A. Bemporad, F. Borrelli und M. Morari, "Model predictive control based on linear programming the explicit solution," Automatic Control, IEEE Transactions on, vol. 47, no. 12, S. 1974 - 1985, Dez. 2002] der Schlüssel für die rechentechnische Durchführbarkeit war. In [A. Wills, D. Bates, A. Fleming, B. Ninness und R. Moheimani, "Application of mpc to an active structure using sampling rates up to 25khz," in Decision and Control, 2005 and 2005 European Control Conference. CDC-ECC '05. 44th IEEE Conference on, 2005, S. 3176 - 3181] werden experimentelle Ergebnisse für die aktive Schwingungsunterdrückung unter Verwendung von MPC mit Beschränkung auf Abtastraten von 5 kHz bis 25 kHz vorgestellt. Experimentelle Ergebnisse für nicht lineare MPC eines isolierten Vollbrücken-Wandlers mit einer Abtastzeit von 150 $\mu$s sind wiedergegeben in [Y. Xie, R. Ghaemi, J. Sun und J. Freudenberg, "Implicit model predictive control of a full bridge dc-dc converter," Power Electronics, IEEE Transactions on, vol. 24, no. 12, S. 2704 -2713, 2009]. Nichtlineare MPC eines Hochsetzstellers ist beschrieben in [J. Bonilla, R. De Keyser, M. Diehl und J. ESPINOZA, "Fast NMPC of a DC-DC converter: an exact Newton real-time iteration approach," in Proc. of the 7th IFAC Symposium on Nonlinear Control Systems (NOLCOS 2007), 2007], es werden aber keine experimentellen Ergebnisse angegeben. Für die simulierte lineare Online-MPC eines Dreiphasen-Netzwechselrichters, die beschrieben ist in [S. Richter, S. Mariethoz und M. Morari, "High-speed online mpc based on a fast gradient method applied to power converter control," in American Control Conference (ACC), 2010, 302010-2. Juli 2010, S. 4737 -4743] wird gezeigt, dass sie in 10 $\mu$s ... 50 $\mu$s auf einem standardmäßigen DSP ausführbar ist; es werden aber keine experimentellen Ergebnisse angegeben. Der im letzten Dokument verwendete Algorithmus basiert auf dem schnellen Gradienten-Verfahren, das vorgeschlagen wird in [S. Richter, C. Jones und M. Morari, "Real-time input-constrained mpc using fast gradient methods," in Decision and Control, 2009 held jointly with the 2009 28th Chinese Control Conference. CDC/CCC 2009. Proceedings of the 48th IEEE Conference on, 2009, S. 7387 -7393].

Für MPC maßgeschneiderte, schnelle Lösungsalgorithmen werden vorgeschlagen in [R. Milman und E. Davison, "A fast mpc algorithm using nonfeasible active set methods," Journal of Optimization Theory and Applications, vol. 139, S. 591-616, 2008, 10.1007/s10957-008-9413-3], [H. J. Ferreau, H. G. Bock und M. Diehl, "An online active set strategy to overcome the limitations of explicit mpc," Int. J. Robust Nonlinear Control, vol. 18, no. 8, S. 816-830, 2008] und [Y. Wang und S. Boyd, "Fast model predictive control using online optimization," Control Systems Technology, IEEE Transactions on, vol. 18, no. 2, S. 267 -278, 2010].

Normalerweise sind Regler für DC-DC-Wandler auf eine Nennlast ausgelegt, die in vielen Fällen ein Widerstand ist. Unter Verwendung eines modellbasierten Reglerentwurfs ist es möglich, einen Regler für einen Wandler mit beliebiger Last zu konzipieren, solange ein geeignetes Modell verfügbar ist. Demzufolge ist es nicht erforderlich, das Regelkonzept auf einem Widerstand mit Nennlast aufzubauen. In diesem Dokument schlagen wir ein für den MPC-Entwurf geeignetes Konvertermodell vor, das eine CPL mit einer zusätzlichen Eingangsfilterkapazität aufweist. Das Modell basiert auf einer linearisierten negativen Ersatzimpedanz der CPL, die von der Ausgangsspannung und dem Leistungsbedarf der Last abhängt. Zwei unterschiedliche Ansätze für linearen MPC-Entwurf werden vorgeschlagen, die Änderungen des Betriebspunkts berücksichtigen. Der erste Ansatz ist einen simplen robusten MPC-Entwurf mit zwei internen Modellen, die Extremwerte der ungefähren Lastimpedanz wiedergeben. Der zweite Ansatz ist ein Scheduling-Regler-Entwurf, dass einen Satz unterschiedlicher Regler-Parameter für eine Reihe von Betriebspunkten über dem erwarteten Betriebsbereich verwendet. Auf der Grundlage des geschätzten Leistungsbedarfs der Last wird der nächstgelegene Parametersatz für die Berechnung des nächsten Regelvorgangs bei jedem Abtastschritt gewählt. Ein Beobachter wird verwendet, um trotz nicht gemessener Störungen eine Regelung ohne bleibende Regelabweichung zu erreichen. Weiters, um eine Filterung von gemessenen Störungen und eine Schätzung des Leistungsbedarfs der Last zu erzielen.

Für die Implementierung der beschränkten MPC wird ein heuristisches Active-Set-Verfahren vorgeschlagen, um innerhalb der begrenzten für die Berechnung verfügbaren Zeit schnell ein gutes Active Set zu finden. Dieses Verfahren und der Ansatz der robusten MPC werden auch vorgestellt in [O. König, S. Jakubek und G. Prochart, "Model predictive control of a battery emulator for testing of hybrid and electric power-trains," 2011, akzeptiert zur Präsentation bei: 2011 IEEE Vehicle Power and Propulsion Conference (VPPC)], jedoch ohne Einschränkungen bezüglich des Drosselstroms.

Ein Ansatz zur Online-MPC (modellprädiktive Regelung) eines Hochleistungs-Step-down-DC-DC-Wandlers wird vorgeschlagen. Der Wandler ist Teil eines Batterieemulators als Ersatz für Traktionsbatterien auf Prüfständen für hybride oder vollelektrische Automobil-Antriebsstränge. Diese Anwendung erfordert es, mit der Ausgangsspannung möglichst schnell einer Referenzspannung von einem simulierten Batteriemodell zu folgen, während diese unempfindlich gegenüber schnellen Lasttransienten ist. Die Kombination des schwach gedämpften Ausgangsfilters des Wandlers mit einem schnell geregelten Wechselrichter, der als CPL fungiert, führt zu einem instabilen System. Die genauen Daten der Last sind in der Phase des Reglerentwurfs nicht bekannt, und der Leistungsbedarf fluktuiert im Betrieb. Für die optimierte Leistung und den Schutz der Hardware sind Stellgrößenbeschränkungen und die Begrenzung des Drosselstroms zu berücksichtigen. Die vorgeschlagene MPC auf der Grundlage eines Active-Set-Verfahrens erzielt trotz der CPL und unter Einhaltung der Eingangs-und Zustandsbeschränkungen eine schnelle Führungsregelung.

Der Regelalgorithmus kann mit der geforderten Abtastrate auf kommerziell verfügbarer digitaler Controller-Hardware ausgeführt werden. Experimentelle Ergebnisse mit einen 60-kW-Batterieemulator, der einen Wechselrichter speist, belegen die Leistungsfähigkeit des vorgeschlagenen Regelungsansatzes.

Gemäß der Erfindung ist der Regler mit einem modellbasierten Reglerentwurfsverfahren konzipiert, wobei im Modell des geregelten Systems ein Lastmodell des Antriebsstrangs verwendet wird.

Eine bevorzugte Ausführungsform ist dadurch gekennzeichnet, dass die Ausgangsspannung gemessen wird, der Leistungsbedarf des Antriebsstrangs geschätzt wird und die Parameter des Lastmodells in Abhängigkeit von der Ausgangsspannung und dem geschätzten Leistungsbedarf der Last geändert werden, und zwar vorzugsweise durch Wechseln zwischen vollständigen Parametersätzen.

Optional erfolgt die Schätzung des Leistungsbedarfs der Last mit einem Beobachter auf der Grundlage des gemessenen Laststroms.

Gemäß der Erfindung ist eine Einrichtung zum Testen eines Antriebsstrangs von Fahrzeugen, die zumindest teilweise elektrisch angetrieben sind, mit einem Simulationssystem für das Energiespeichersystem und mit einem Regler zur Steuerung der Spannung, mit der der Antriebsstrang auf eine Weise beaufschlagt wird, dass diese Spannung wie

EP 2 855 193 B1

bei einem physischen Speichersystem dynamisch wirkt, wobei der Regler mit dem Simulationssystem gekoppelt ist, dadurch gekennzeichnet, dass im Controller eine modellprädiktive Regelschleife vorgesehen ist und dass im geregelten System ein Lastmodell integriert ist.

Eine bevorzugte Ausführungsform dieser Einrichtung ist dadurch gekennzeichnet, dass ein vom Leistungsbedarf der Last abhängiges Modell integriert ist.

Die beiden erwähnten Einrichtungen können optional dadurch gekennzeichnet sein, dass im Regler eine modellprädiktive Regelung vorgesehen ist.

Ein Modell kann integriert sein, das von der Ausgangsspannung des Energiespeichersystems abhängig ist.

Die modellprädiktive Regelung des Batteriesimulators ermöglicht die optimierte Integration des Lastmodells in das Modell des geregelten Systems, sodass die Last nicht mehr eine unbekannte Störung ist, sondern explizit im Controller berücksichtigt wird. Die Parameter des Lastmodells sind abhängig vom Leistungsbedarf der Last. Wenn ein linearisiertes Modell für den modellbasierten prädiktiven Regler verwendet wird, sind die Modellparameter zusätzlich von der Ausgangsspannung abhängig. Daher werden Steuerparametergruppen übernommen, die für eine Planung des modellbasierten prädiktiven Controllers geeignet sind. Das Umschalten oder Vermischen der Parametergruppen erfolgt in Abhängigkeit von der gemessenen Ausgangsspannung und dem geschätzten Strombedarf. Zu diesem Zweck erfolgt die Schätzung des Leistungsbedarfs der Last mit einem Beobachter und auf der Grundlage des gemessenen Laststroms.

In der folgenden Spezifikation wird die Erfindung mit Bezug auf die beigefügten Zeichnungen und Figuren näher beschrieben.

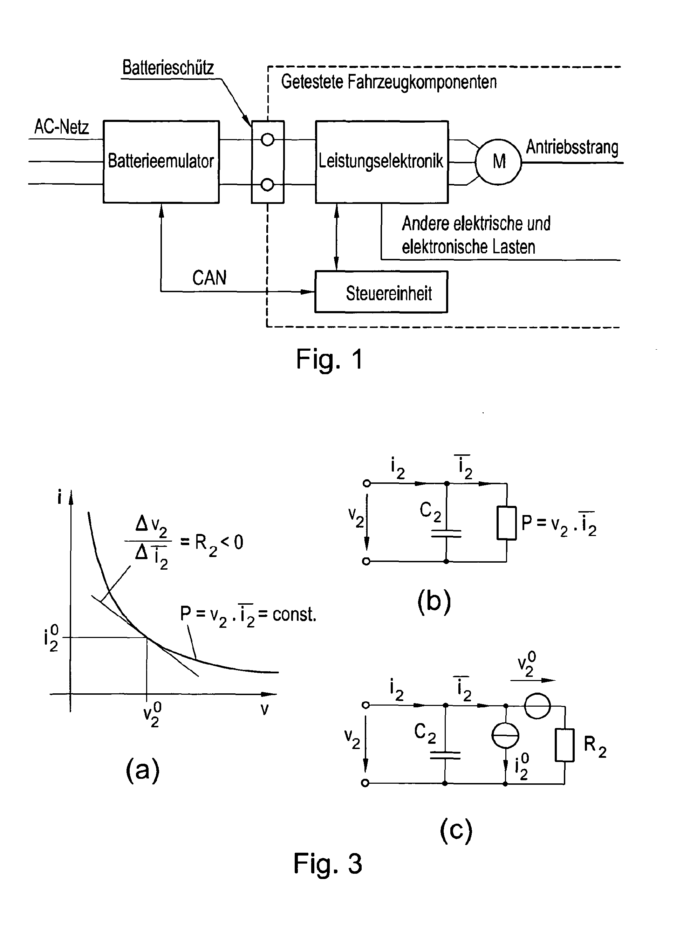

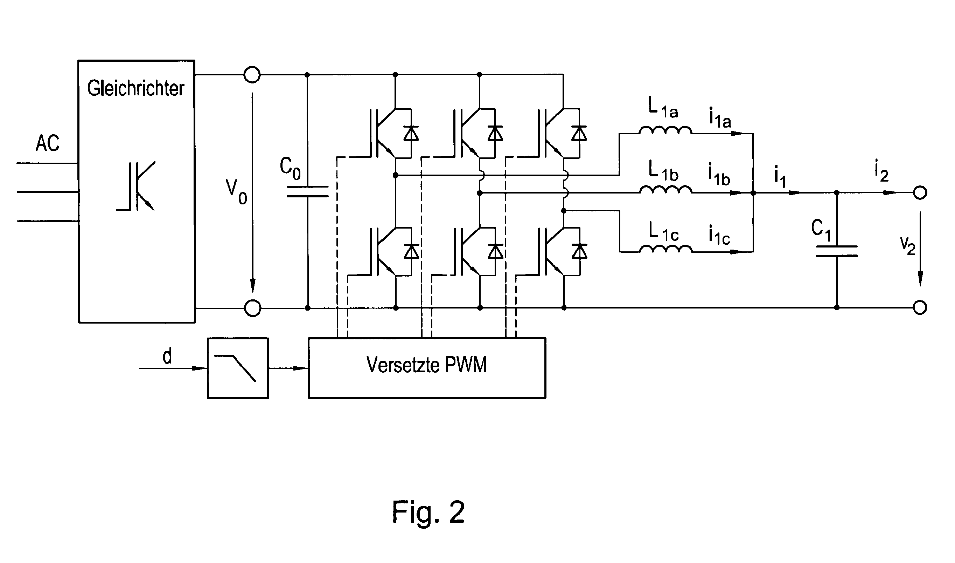

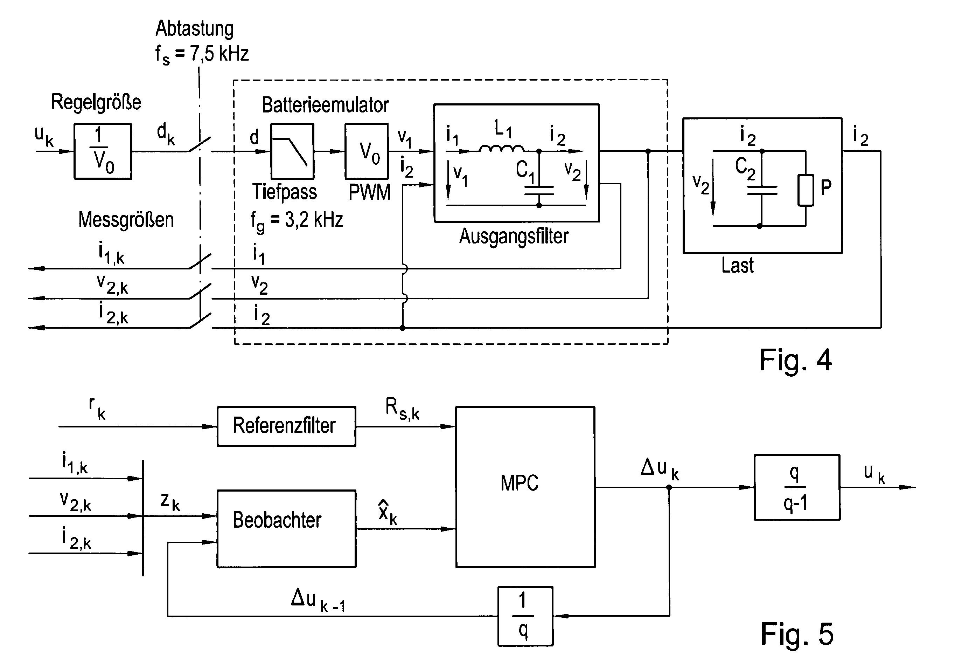

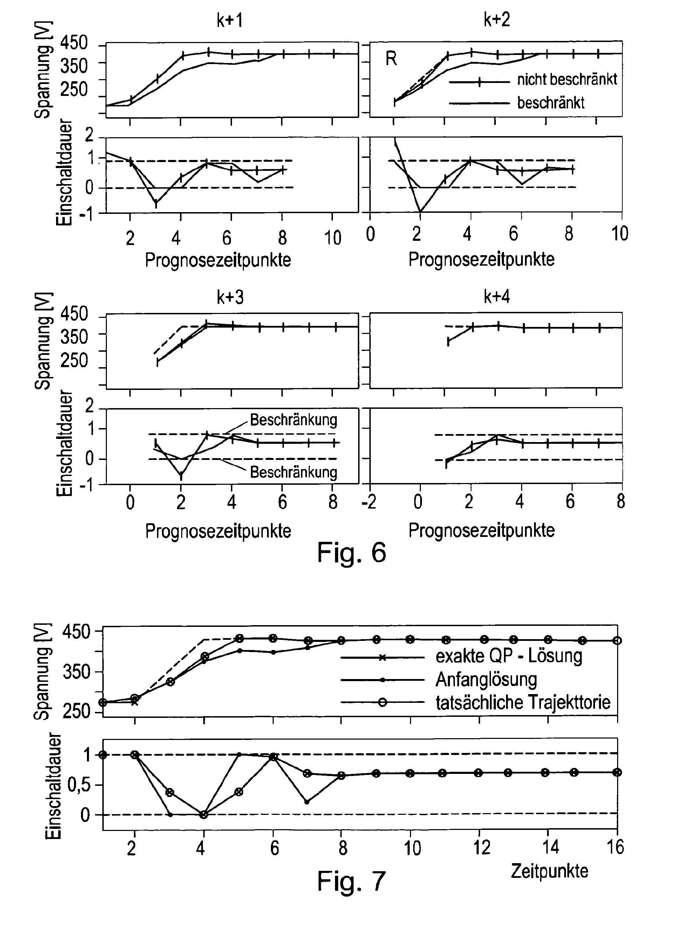

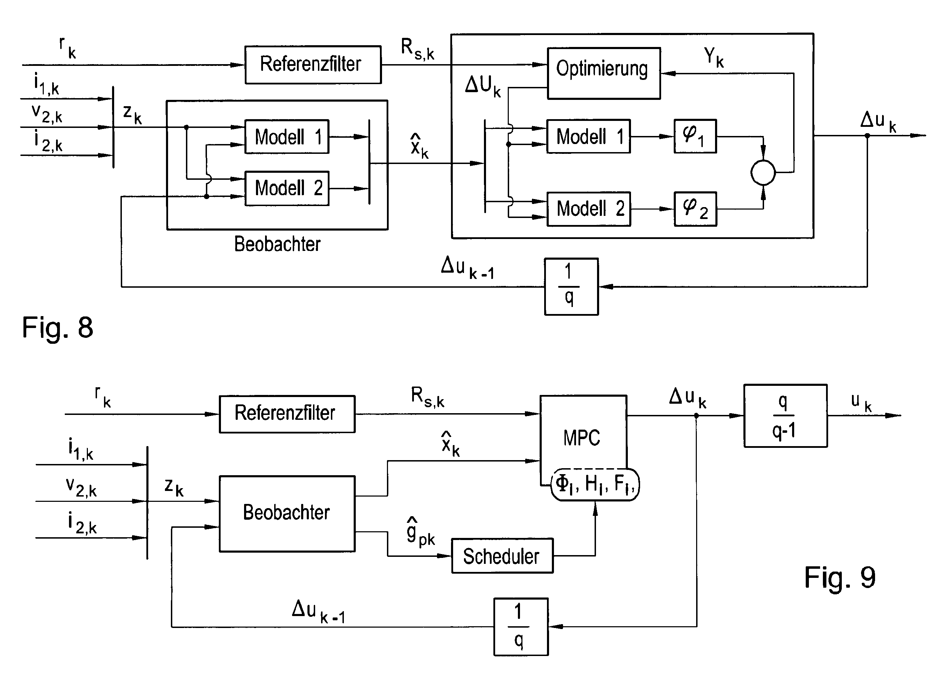

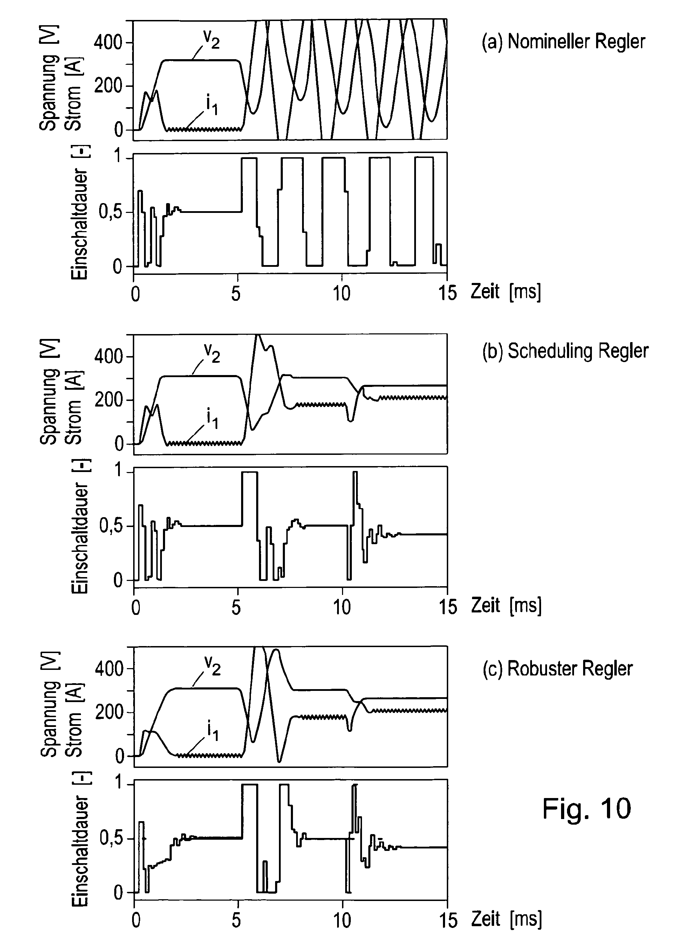

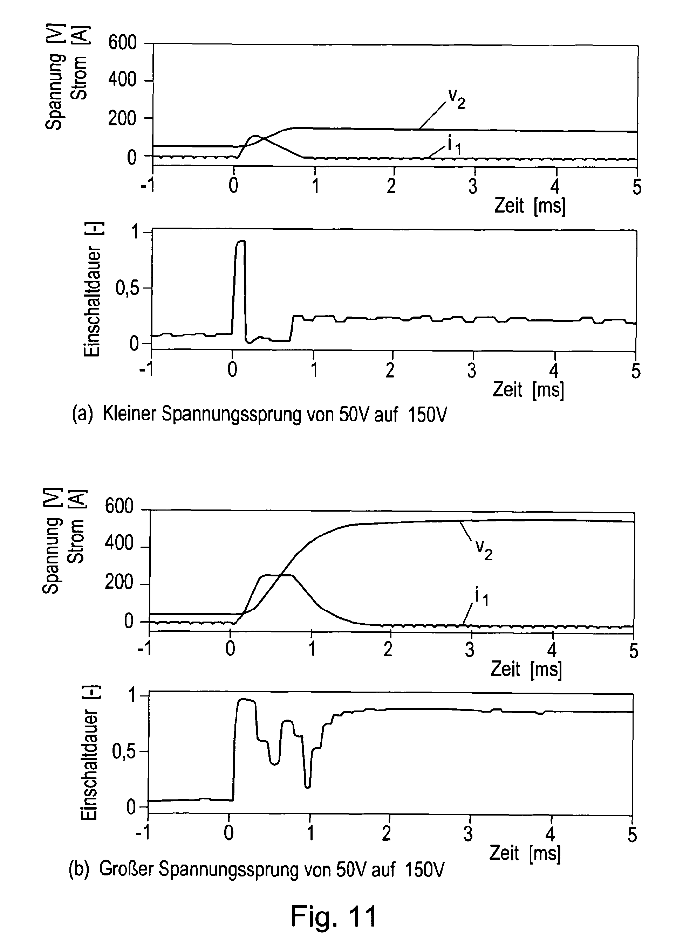

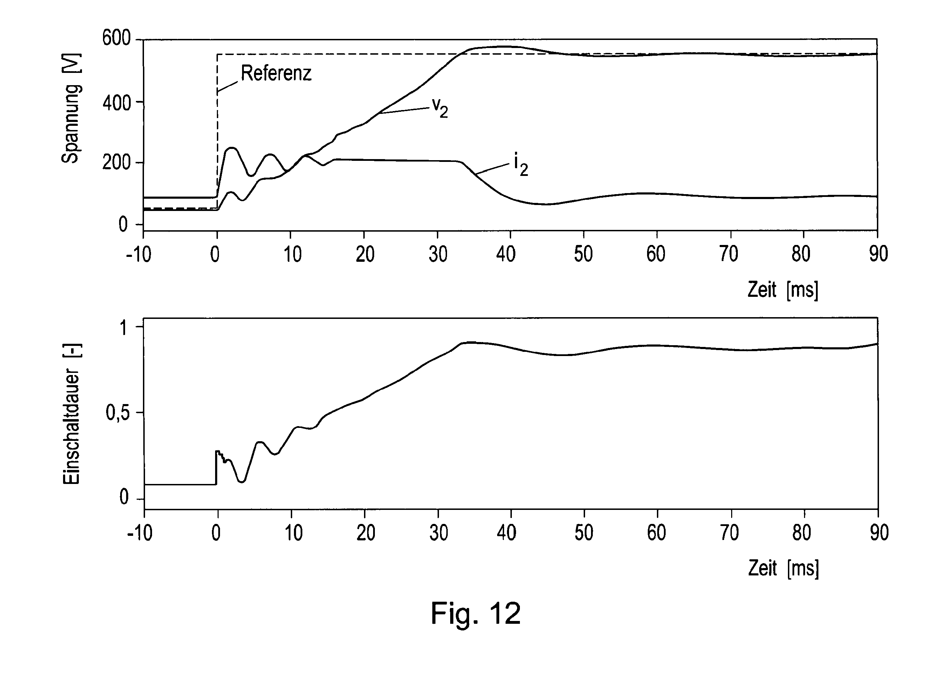

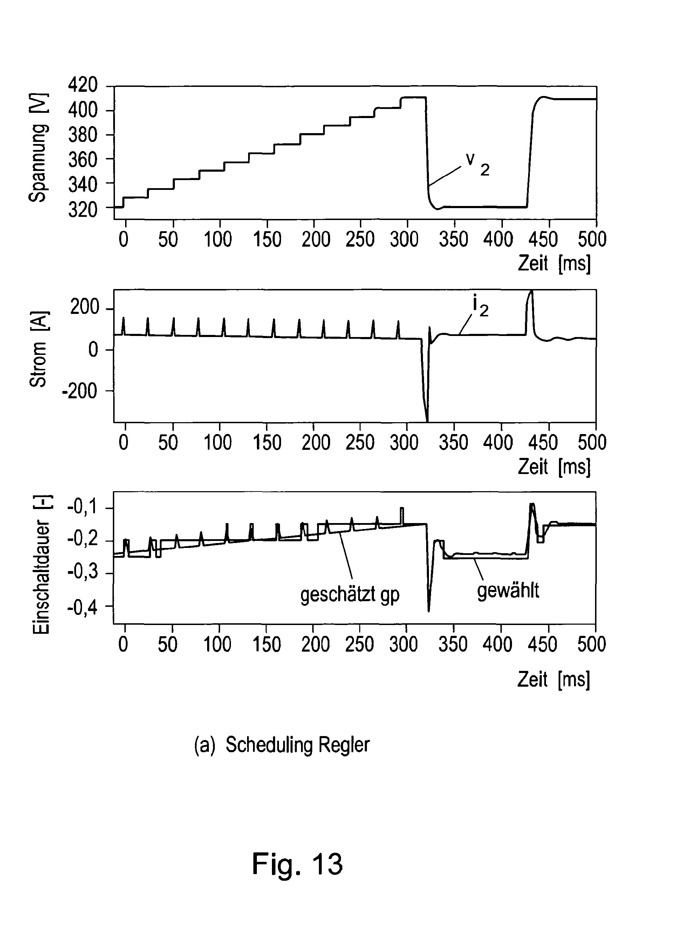

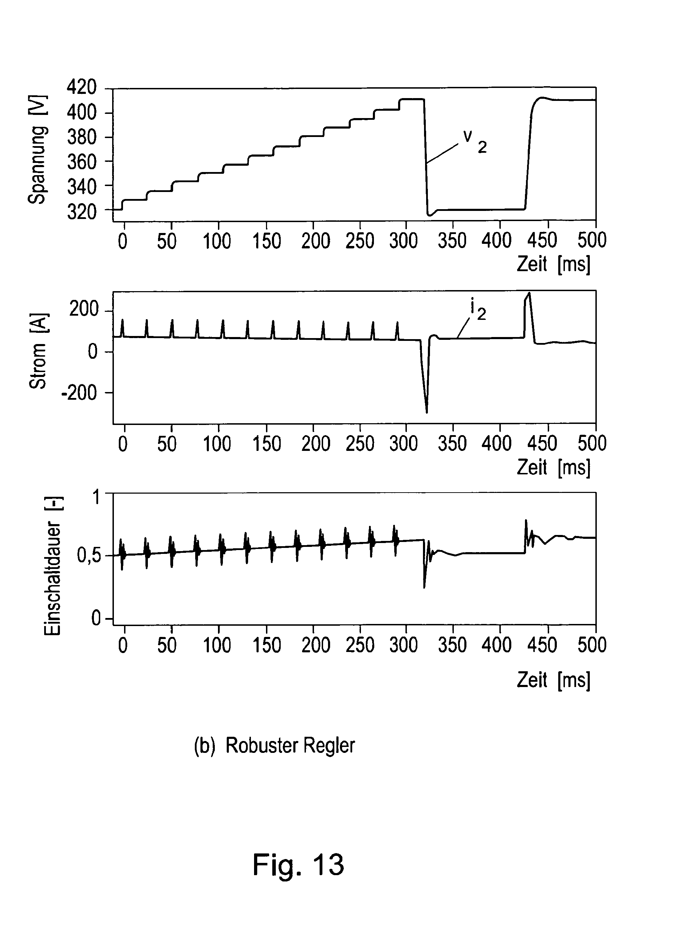

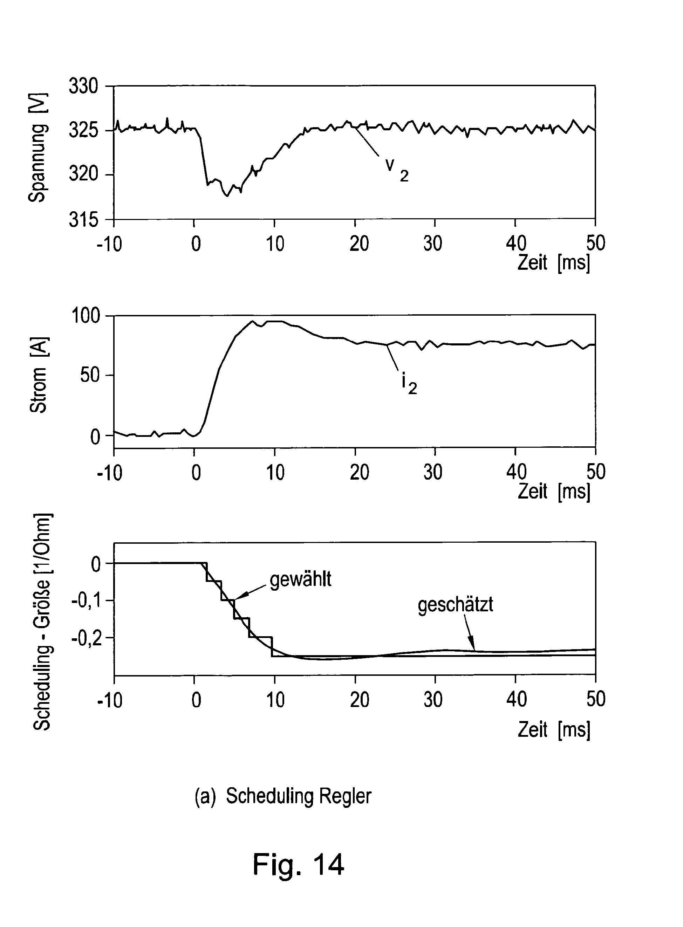

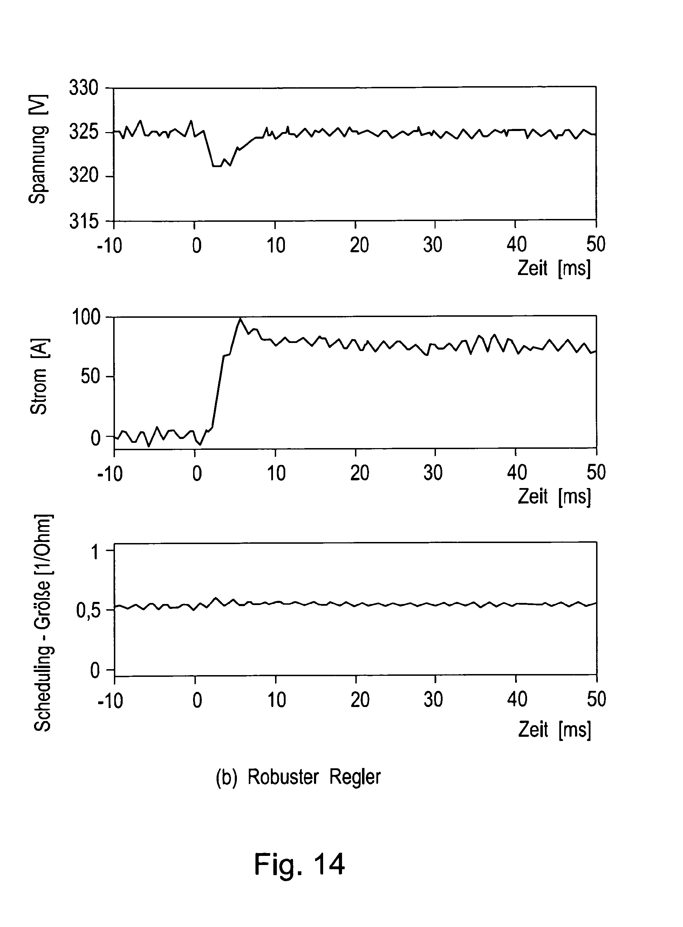

Fig. 1 zeigt in schematischer Form einen Prüfstand für Antriebsstränge mit Batterieemulator. Fig. 2 zeigt ein schematisches Diagramm der Ausgangsstufe des Batterieemulators. Fig. 3 ist eine Darstellung des Lastmodells. (a) Statische Kennlinie einer Konstantleistungslast (b) Nichtlineares Lastmodell (c) Um den Betriebspunkt linearisiertes Kleinsignalmodell; Fig. 4 ist ein Blockdiagramm des Batterieemulatormodells; Fig. 5 zeigt ein Blockdiagramm der vorgeschlagenen Regler-Struktur; Fig. 6 ist eine Darstellung des vorgeschlagenen, auf die modellprädiktive Regelung (MPC) angewandten Algorithmus, wobei die oberen Zeilen die prädizierten Trajektorien der Ausgangsspannungs wiedergeben und die unteren Zeilen entsprechende Sequenzen der Stellgröße wiedergeben, während die Spalten aufeinanderfolgende Abtastschritte darstellen; Fig. 7 zeigt einen Vergleich des vorgeschlagenen Algorithmus mit einer MPC, die einen allgemeinen QP-Lösungsalgorithmus verwendet; Fig. 8 ist ein Blockdiagramm des robusten Regler-Konzepts; Fig. 9 zeigt ein Blockdiagramm des Scheduling-Reglers; Fig. 10 zeigt die Simulationsresultate für sprungförmige Änderungen des Leistungsbedarfs von 0 kW auf 60 kW mit Konstantleistungslast, wobei die oberen Einträge die Ausgangsspannung, den Drosselstrom und den Laststrom wiedergeben. Die unteren Linien zeigen das angewandte Tastverhältnis; Fig. 11 zeigt experimentelle Ergebnisse für sprunförmige Änderungen der Referenzspannung im Leerlauf; Fig. 12 ist ein Diagramm von sprunförmigen Änderungen der Referenzspannung das die Wirksamkeit der Begrenzung des Drosselstroms zeigt; Fig. 13 zeigt experimentelle Ergebnisse für eine Sequenz von Änderungen der Referenzspannung im Betrieb mit Konstantleistungslast, wobei die unteren Linien die Auswahl des Parametersatzes für den Scheduling-Regler und das Tastverhältnisfür den robusten Controller wiedergeben; und Fig. 14 zeigt experimentelle Resultate für sprungförmige Änderungen des Leistungsbedarfs einer Konstantleistungslast von P = 0 kW auf P = 24 kW.

Ein Beispiel einer typischen Prüfstandkonfiguration ist in Fig. 1 wiedergegeben. Die Anlage besteht aus der Leistungselektronik eines HEV- oder EV-Antriebsstrangs, die einerseits die Last darstellt und andererseits den Batterieemulator, der die physische Traktionsbatterie ersetzt. Beim Reglerentwurf werden der Batterieemulator und die Last separat modelliert und anschließend in einem System modell zusammengefasst.

Ein schematisches Diagramm des Batterieemulators ist in Fig. 2 gezeigt. Hauptbestandteil ist die Ausgangsstufe, die aus drei versetzt schaltenden Step-down-DC-DC-Wandlern mit einem gemeinsamen Ausgangskondensator $C_1$ besteht, welche die Ausgangsspannung $V_2$ bereitstellen, die zur Emulation der Batterieanschlussspannung verwendet wird. Der Gleichrichter wird hier nicht berücksichtigt, und $C_0$ ist groß genug, sodass die DC-Zwischenkreisspannung als konstant angenommen werden kann.

Ein Analogmodulator führt über einen einzelnen Einschaltbefehl d an seinem Eingang eine Pulsweitenmodulation (PWM) und Ausgleich der Drosselströme durch. Ein vereinfachtes Modell für den Echtzeit-MPC wird über Annäherung der PWM als kontinuierliche Stellspannung erhalten [R. W. Erickson und D. Maksimovic, Fundamentals of power electronics. Springer, 2001] und über Parallelanordnung der drei Drosseln in einer Ersatzinduktivität$L1$ wie in [S. Mariethoz, A. Beccuti und M. Morari, "Model predictive control of multiphase interleaved dc-dc converters with sensorless current limitation and power balance," in Power Electronics Specialists Conference, 2008. PESC 2008. IEEE, 2008, S. 1069 -1074] oder [H. Bae, J. Lee, J. Yang und B. H. Cho, "Digital resistive current (drc) control for the parallel interleaved dc-dc converters," Power Electronics, IEEE Transactions on, vol. 23, no. 5, S. 2465 -2476, 2008].

Anschließend wird die Summe aller drei Ströme $i1 = i1a +i1b+i1c$ als neuer Drosselstrom gewählt. Ohmsche Widerstände von Drosseln und Halbleiterschaltern sind näherungsweise durch R$L1$ ausgedrückt. Der durch die Last aufgenommene Strom wird durch $i2$ bezeichnet. Mit dem als $X_c = [i1\ v2]^T$, gewählten Zustandsvektor für den Konverter, der Stellgröße u = d · VO und der Störgröße $i2$ ist das System beschrieben durch das Zustandsraummodell

5

$$\dot{x}_c = \underbrace{\begin{bmatrix} -\frac{R_{L1}}{L_1} & -\frac{1}{L_1} \\ \frac{1}{C_1} & 0 \end{bmatrix}}_{A_c} x_c + \underbrace{\begin{bmatrix} \frac{1}{L_1} \\ 0 \end{bmatrix}}_{B_c} u + \underbrace{\begin{bmatrix} 0 \\ -\frac{1}{C_1} \end{bmatrix}}_{E_c} i_2$$

$$v_2 = \underbrace{\begin{bmatrix} 0 & 1 \end{bmatrix}}_{C_c} x_c. \tag{1}$$

Die Größen $i1$, $v2$ und $i2$ sind messbar.

Der Wechselrichter des HEV/EV-Elektromotors ist ein Wechselrichter mit schnell geregelter Pulswechselrichter mit, dessen Spannungs-Zwischenkreis mit dem BE verbunden ist. Der Leistungsbedarf $P$ des Wechselrichters ist von seiner Versorgungsspannung $V_2$ unabhängig, solange sie in einem angegebenen Bereich liegt. Diese Konfiguration ergibt eine Konstantleistungslast (CPL), sodass sich die Beziehung zwischen dem von der CPL aufgenommenen Strom $i_2$ und der Versorgungsspannung ergibt als

$$\tilde{i}_2 = \frac{P}{v_2}. \tag{2}$$

Gleichung (2) schließt eine Rückkopplung von der Ausgangsspannung zum Laststrom-Störeingang und führt zur nicht linearen Zustandsgleichung

$$\dot{x}_c = A_c x_c + E_c f(x_c) + B_c u \quad \text{with} \quad f(x_c) = \frac{P}{v_2(x_c)}. \tag{3}$$

Durch die Einführung des differentiellen Ersatzwiderstands R2

$$\frac{1}{R_2} = \left.\frac{\partial}{\partial v_2} f(x_c)\right|_{v_2^0, P} = -\frac{P}{(v_2^0)^2} = -\frac{i_2^0}{v_2^0} \tag{4}$$

bei einem Betriebspunkt $v_2^0$ und $i_2^0 = P/v_2^0$ ergibt sich ein betriebspunktabhängiges linearisiertes Anlagenmodell wie folgt

$$\dot{x}_p = \left(A_c + E_c \frac{1}{R_2} C_c\right) x_p + B_c u + E_c \left(i_2^0 - \frac{1}{R_2} v_2^0\right) \tag{5}$$

Für P > 0 und v2 > 0 ist R2 negativ, sodass die Anlage instabil wird.

Fig. 3 ist eine Illustration des Lastmodells. Punkt (a) gibt eine statische Kennlinie einer CPL wieder, Punkt (b) ein nicht lineares Lastmodell und Punkt (c) ein um den Betriebspunkt $v_2^0$, $i_2^0$, linearisiertes kleinsignalmodell. Ein neuer Ausgangsvektor z=$[i_1\ v_2\ i_2]^T$ wird eingeführt, um alle messbaren Größen wiederzugeben. Zuleitungswiderstände sind hinreichend klein, sodass der DC-Zwischenkreiskondensator $C_2$ des Wechselrichters parallel zu $C_1$ hinzugefügt werden kann. Als Ergebnis erhält man das Modell in (6). Zur Erleichterung der Bezeichnung wird das Symbol $g_p = 1/R_2$ als Parameter verwendet. Die Variable $w = i_2^0 - v_2^0 \cdot g_p$ bezeichnet den Offset des Betriebspunkts.

$$\dot{\boldsymbol{x}}_{\mathrm{p}} = \underbrace{\begin{bmatrix} -\frac{R_{L1}}{L_1} & -\frac{1}{L_1} \\ \frac{1}{C_1+C_2} & -\frac{1}{C_1+C_2}g_{\mathrm{p}} \end{bmatrix}}_{\boldsymbol{A}_{\mathrm{p}}(g_{\mathrm{p}})} \boldsymbol{x}_{\mathrm{p}} + \underbrace{\begin{bmatrix} \frac{1}{L_1} \\ 0 \end{bmatrix}}_{\boldsymbol{B}_{\mathrm{p}}} u + \underbrace{\begin{bmatrix} 0 \\ -\frac{1}{C_1+C_2} \end{bmatrix}}_{\boldsymbol{E}_{\mathrm{p}}} w$$

$$\boldsymbol{z} = \underbrace{\begin{bmatrix} 1 & 0 \\ 0 & 1 \\ 1 - \frac{C_1}{C_1+C_2} & \frac{C_1}{C_1+C_2}g_{\mathrm{p}} \end{bmatrix}}_{\boldsymbol{C}_{\mathrm{p}}(g_{\mathrm{p}})} \boldsymbol{x}_{\mathrm{p}} + \underbrace{\begin{bmatrix} 0 \\ 0 \\ \frac{C_1}{C_1+C_2} \end{bmatrix}}_{\boldsymbol{F}_{\mathrm{p}}} w \qquad (6)$$

Fig. 4 zeigt ein Blockdiagramm der resultierenden Modellstruktur, die zum Reglerentwurf einschließlich E/A-Schnittstellen und Abtastung zur digitalen Regelung verwendet wird. Die Abtastung ist mit den Mittelpunkten der drei versetzten symmetrischen PWM-Trägersignale synchronisiert, sodass die Abtastrate $f_s$ dem Dreifachen der Schaltfrequenz $f_{sw}$ jeder Phase entspricht. Das zeitkontinuierliche Modell (6) wird in ein zeitdiskretes (7) unter Verwendung einer Annäherung der PWM mittelsAbtast-Halteglied umgewandelt. Im Interesse der kompakten Bezeichnung wird der Offset $W_k$ des Betriebspunkts als neuer Zustand hinzugefügt, sodass $X_{\mathrm{d}k} = [i_{1,k} \ \upsilon_{2,k} \ w_k]^{\mathsf{T}}$.

$$\boldsymbol{x}_{\mathrm{d}k+1} = \boldsymbol{A}_{\mathrm{d}}(g_{\mathrm{p}}) \cdot \boldsymbol{x}_{\mathrm{d}k} + \boldsymbol{B}_{\mathrm{d}}(g_{\mathrm{p}}) \cdot u_k$$

$$y_k = \boldsymbol{C}_{\mathrm{d}}^y \cdot \boldsymbol{x}_{\mathrm{d}k}, \quad z_k = \boldsymbol{C}_{\mathrm{d}}(g_{\mathrm{p}}) \cdot \boldsymbol{x}_{\mathrm{d}k} \qquad (7)$$

Das Regelungskonzept wird vorzugsweise als modellprädiktive Regelung (MPC) gewählt. Zur MPC-Online-Formulierung nach [J. Maciejowski, Predictive control: with constraints. Pearson education, 2002] wird eine erweiterte zeitdiskrete Systembeschreibung verwendet

$$\boldsymbol{x}_{k+1} = \boldsymbol{A}\boldsymbol{x}_k + \boldsymbol{B}\Delta u_k, \quad y_k = \boldsymbol{C}\boldsymbol{x}_k, \qquad (8)$$

wobei der Zustandsvektor als $\boldsymbol{x}_k = \begin{bmatrix} \boldsymbol{x}_{\mathrm{d}k}^{\mathsf{T}} & u_{k-1} \end{bmatrix}^{\mathsf{T}}$. gewählt wird. wobei der Zustandsvektor als gewählt wird.

Dies ermöglicht eine Erfassung ohne bleibenden Regelfehler in Kombination mit einem Zustandsbeobachter nach [U. Maeder, F. Borrelli und M. Morari, "Linear offset-free model predictive control," Automatica, vol. 45, no. 10, S. 2214 - 2222, 2009] und berücksichtigt auch die Verzögerung von einem Abtastschritt, die durch die benötigte Rechenzeit entsteht.

Zu jedem Zeitpunkt $k$ wird eine optimierte Sequenz von Regelvorgängen $\Delta uk$ für einen Regelhorizont $N_c$ und einen Prädiktionshorizont $N_p$ bestimmt, sodass das folgende Kriterium minimiert wird:

$$J_k = (\boldsymbol{R}_{s,k} - \boldsymbol{Y}_k)^{\mathsf{T}} \boldsymbol{Q} (\boldsymbol{R}_{s,k} - \boldsymbol{Y}_k) + \Delta \boldsymbol{U}_k^{\mathsf{T}} \bar{\boldsymbol{R}} \Delta \boldsymbol{U}_k \qquad (9)$$

Die symmetrischen und positiv definiten Gewichtungsmatrizen $\boldsymbol{Q}$ und R gewichten (i) Abweichungen der vorhergesagten Ausgangstrajektorie $\boldsymbol{Y}k$ von der Referenztrajektorie $R_s,k$ bzw. (ii) den Regelaufwand $\Delta\boldsymbol{U}k$. Die Entscheidungsvariable ist die Sequenz künftiger Regelvorgänge

$$\Delta \boldsymbol{U}_k = \begin{bmatrix} \Delta u_{k|k} & \cdots & \Delta u_{k+N_c-1|k} \end{bmatrix}^{\mathsf{T}} \qquad (10)$$

und die Ausgangstrajektorie ist die Sequenz vorhergesagter Ausgaben

$$\boldsymbol{Y}_k = \begin{bmatrix} y_{k+1|k} & \cdots & y_{k+N_p|k} \end{bmatrix}^{\mathsf{T}} = \boldsymbol{F}\boldsymbol{x}_k + \boldsymbol{\Phi}\Delta \boldsymbol{U}_k \qquad (11)$$

wobei die Matrizen $\boldsymbol{F}$ und $\Phi$ definiert sind als

$$F = \begin{bmatrix} CA \\ \vdots \\ CA^{N_P} \end{bmatrix}; \qquad \Phi = \begin{bmatrix} CB & \cdots & 0 \\ CAB & \cdots & 0 \\ \vdots & \ddots & \vdots \\ CA^{N_P-1}B & \cdots & CA^{N_P-N_c}B \end{bmatrix} \qquad (12)$$

Die Stärke von MPC liegt in der Fähigkeit, Beschränkungen explizit zu berücksichtigen. Die Begrenzung des PWM-Tastverhältnisses im Bereich $0 \leq dk \leq 1$ und somit $0 \leq uk \leq V0$ ist daher formuliert anhand von Ungleichungsbedingungen in der Form

$$M_u \Delta U_k \leq \gamma_u \qquad (13)$$

bezogen auf das Minimierungsproblem, sodass für einen Horizont $Ncc \leq N_c$ in dem die Regelvorgänge begrenzt sind auf

$$0 \leq u_{k+i|k} = u_{k-1|k} + \sum_{j=0}^{i} \Delta u_{k+j|k} \leq V_0 \qquad (14)$$

für alle $i \in \mathbf{N} \leq Ncc$.

Zusätzlich können die Induktorströme zum Überstromschutz der IGBT-Schalter und zur Vermeidung magnetischer Sättigung der Induktoren begrenzt werden. Dies wird erreicht über die Angabe von Ungleichheitsbedingungen $M_x \Delta U_k \leq \lambda_x$ den vorhergesagten Zuständen, sodass gilt

$$-i_1^{\max} \leq i_{1,k+i|k} \leq i_1^{\max} \qquad (15)$$

für $i \in \mathbf{N} \leq Ncc$. Die Eingangs- und Zustandsbedingungen werden anschließend in einer Gruppe von Ungleichungsbedingungen kombiniert:

$$M \Delta U_k \leq \gamma \quad \text{with} \quad M = \begin{bmatrix} M_u \\ M_x \end{bmatrix}, \quad \gamma = \begin{bmatrix} \gamma_u \\ \gamma_x \end{bmatrix} \qquad (16)$$

Durch die Implementierung des Prinzips des zurückweichenden Horizonts (Receding Horizon Principle) wird zu jedem Zeitpunkt nur der erste Regelvorgang $uk = uk\text{-}1 + \Delta uk|k$ angewandt, und der Rest von $\Delta Uk$ wird verworfen. Ein Blockdiagramm des sich ergebenden Regler-Schemas ist in Fig. 5 dargestellt.

Der Regler kann über die Gewichtungsmatrizen **Q** und **R** eingestellt werden. Mit nur einem geregeltem Ausgang wird **Q** eine $N_p \times N_p$ Einheitsmatrix zugeordnet, und **R** wird eine $N_c \times N_c$

Diagonalmatrix zugeordnet, sodass $\overline{R} = \text{diag}([R\ R\ ...\ R]^T)$ ist. Dies vereinfacht die Einstellung des Reglers auf die Auswahl eines einzelnen skalaren Werts R. Kleinere Werte von R erhöhen die Bandbreite der geschlossenen Regelschleife, erhöhen aber auch die Sensibilität gegenüber Messrauschen und Modellfehlern des Anlagenmodells.

Im Folgenden werden die Vorteile der Verwendung einer beschränkten Echtzeit-MPC bezüglich der Erfindung erläutert. Eine Darstellung des vorgeschlagenen Algorithmus in Fig. 6 bei Anwendung auf eine modellprädiktive Regelung zeigt die Entwicklung der Vorhersagen im Zeitverlauf. Die obere Zeile zeigt vorhergesagte Trajektorien der Ausgangsspannung, und die untere Zeile zeigt entsprechende Sequenzen von Regelgrößen. Die Spalten geben aufeinanderfolgende Zeitpunkte wieder. Die Regelvorgänge sind nicht einfach abgeschnitten, um die Beschränkungen einzuhalten, sondern auch die nicht beschränkten Vorgänge sind abgeändert. Im Zeitverlauf wird die Lösung mehr und mehr verfeinert.

Die Herausforderung der Regelung der Leistungselektronik mit beschränkter MPC besteht in der ausreichend schnellen Lösung des Minimierungsproblems, um Abtastraten im kHz-Bereich zu erzielen. Wir schlagen hier einen einfachen, aber wirksamen Algorithmus vor, der die Struktur des gegebenen Problems ausnützt.

Wenn das System keine Beschränkungen aufweisen würde, dann wäre die optimierte Regelsequenz $\Delta U_k^o$ über die Minimierung von (9) bezüglich $\Delta Uk$ mit folgender Gleichung gegeben:

$$\Delta U_k^0 = \left( \Phi^{\mathrm{T}} Q_y \Phi + \bar{R} \right)^{-1} \Phi^{\mathrm{T}} Q_y \left( R_{s,k} - F x_k \right) \qquad (17)$$

Für Beschränkungen in der Form von (13) drücken jede Zeile $m_j$ von $M$ und das entsprechende Element $\gamma_j$ von $\gamma$ eine Beschränkung aus. Jede beliebige Kombination aktiver

Beschränkungen ist als Active Set $M_{\mathrm{act}}$, $\gamma_{\mathrm{act}}$, ausgedrückt. Mit der Hesse-Matrix $H$ (18) und dem Vektor des Lagrange-Multiplikators $\lambda_{\mathrm{act}}$ (19):

$$H = 2 \left( \Phi^{\mathrm{T}} Q_y \Phi + \bar{R} \right) \qquad (18)$$

$$\lambda_{\mathrm{act}} = - \left( M_{\mathrm{act}} H^{-1} M_{\mathrm{act}}^{\mathrm{T}} \right)^{-1} \left( \gamma_{\mathrm{act}} - M_{\mathrm{act}} \Delta U^0 \right), \qquad (19)$$

ergibt sich die beschränkte Lösung $\Delta Uk$ durch die Aktualisierung der nicht beschränkten Lösung zu

$$\Delta U_k = \Delta U_k^0 - H^{-1} M_{\mathrm{act}}^{\mathrm{T}} \lambda_{\mathrm{act}} \qquad (20)$$

Die verbleibende Aufgabe ist das Finden des Active Sets, dass $Jk$ minimiert. Active-Set-Verfahren erfordern normalerweise viele Iterationen durch Hinzufügen und Entfernen von Beschränkungen, bis die optimierte Lösung gefunden ist. Im schlimmsten Fall müssen alle möglichen Kombinationen von Beschränkungen getestet werden. Es ist daher nicht möglich, mit Active-Set-Verfahren eine polynomielle obere Grenze für die Anzahl der Iterationen zu finden [H. J. Ferreau, H. G. Bock, and M. Diehl, "An online active set strategy to overcome the limitations of explicit mpc," Int. J. Robust Nonlinear Control, vol. 18, no. 8, S. 816-830, 2008]. Das Testen aller möglichen Active Sets wird vermieden durch (i) die Verwertung der Problemstruktur zur Eliminierung irrelevanter Kombinationen von Beschränkungen und (ii) den Abbruch nach einer begrenzten Anzahl von Iterationen und der Anwendung einer nicht optimierten Lösung wie in [H. J. Ferreau, H. G. Bock und M. Diehl, "An online active set strategy to overcome the limitations of explicit mpc," Int. J. Robust Nonlinear Control, vol. 18, no. 8, S. 816-830, 2008] und [Y. Wang and S. Boyd, "Fast model predictive control using online optimization," Control Systems Technology, IEEE Transactions on, vol. 18, no. 2, S. 267 -278, 2010].

Ein heuristischer Ansatz, der auf das spezifische vorliegende Problem anwendbar ist, lautet wie folgt. (i) Finden der Beschränkung mit maximaler Verletzung. Jedes Element $\delta j > 0$ des Vektors $\delta = (M \Delta Uk - \gamma)$ gibt die Verletzung einer Beschränkung an. Im Fall mehrerer gleichzeitiger Verletzungen kann das größte Element $\delta i$ mit

$$i = \max_j (m_j^{\mathrm{T}} \Delta U_k - \gamma_j) \qquad (21)$$

unter der Bedingung, dass alle Beschränkungen gleich skaliert sind, als Indikator für die maximale Verletzung genommen werden. (ii) Hinzufügen von $\{m_i^{\mathrm{T}}, \gamma_i\}$ zum Active Set und (iii) Neuberechnung von (19), (20). (iv) Wiederholung mit einem Maximum von $N_{cc}$ Iterationen, solange Beschränkungen verletzt werden. Beschränkungen werden zum Active Set nur hinzugefügt, aber nie daraus entfernt. Dieses Verfahren ist in Algorithmus 1 zusammengefasst.

| **Algorithmus 1** Active-Set-Verfahren mit vorzeitigem Abbruch | |
| --- | --- |
| 1: | Initialisieren mit leerem Active Set. |
| 2: | Berechnen der nicht beschränkten Lösung (17) |
| 3: | **for** $Ncc$ Iterationen **do** |
| 4: |     **if** alle Beschränkungen sind erfüllt **then** |
| 5: |         Stop. |
| 6: |     **else** |
| 7: |         Maximale Verletzung $\delta i$ aus (21) finden. |
| 8: |         Beschränkung $\{m_i^{\mathrm{T}}, \gamma_i\}$ zum Active Set hinzufügen. |
| 9: |         Lösung für Active Set mit (19), (20) berechnen. |
| 10: |     **end if** |
| 11: | **end if** |

Wenn nur Eingangsbeschränkungen berücksichtigt werden, ist die erhaltene Lösung machbar, aber nicht unbedingt optimal. Wegen der modellprädiktiven Regelung wird nur der erste Regelvorgang $\Delta \boldsymbol{U}k$ angewandt. Es ist somit nicht erforderlich, die vollständige Lösung zu finden, sondern nur eine Lösung, die sich an den ersten Vorgang der optimierten Sequenz nah genug annähert, sodass die gewünschte Trajektorie erzielt werden kann. Das simulierte Beispiel in Fig. 6 veranschaulicht, wie sich die Lösungen im Zeitverlauf für $N_p = 16$, $N_c = 8$, $Ncc = 5$ entwickeln. Fig. 7 zeigt, dass die sich ergebende Trajektorie zu der aus der quadratischen Programmierung erhaltenen exakten Lösung [The Mathworks Inc., "Optimization toolbox 4.3," 2009]. nahezu identisch ist

Der Vergleich des vorgeschlagenen Algorithmus mit einer MPC unter Verwendung eines allgemeinen QP-Lösungsalgorithmus in Fig. 7 zeigt, dass es fast keinen Unterschied zwischen den beiden Trajektorien gibt, obwohl die anfängliche Lösung zum Zeitpunkt 1 weit davon entfernt ist, optimiert zu sein.

Um in der Lage zu sein, gleichzeitig auch Zustandsbeschränkungen zu verarbeiten, ist es erforderlich, die Zeilen von $\boldsymbol{M}$ and $\gamma$ zu skalieren, sodass die Elemente von $\delta$, d. h. der Betrag der Verletzung der Beschränkung, vergleichbar sind. Dies wird durch die Normierung der Eingangsbeschränkungen und Zustandsbeschränkungen auf deren jeweils zulässigen Bereich erreicht.

$$M = \begin{bmatrix} M_u \kappa_u \\ M_x \kappa_x \end{bmatrix}, \quad \gamma = \begin{bmatrix} \gamma_u \kappa_u \\ \gamma_x \kappa_x \end{bmatrix} \qquad (22)$$

$$\kappa_u = 1/(u^{\max} - u^{\min}) \qquad (23)$$

$$\kappa_x = 1/(y_x^{\max} - y_x^{\min}) \qquad (24)$$

Da der vorgeschlagene Algorithmus die QP nicht exakt löst, kann das sich ergebende Regelgesetz kurze Verletzungen des Grenzwerts des Drosselstroms verursachen, während die Regelgröße für die optimale Referenzerfassung gesättigt wird. Es kann daher erforderlich sein, den Zustandsbeschränkungen Vorrang einzuräumen, indem sie mit einem Präferenzfaktor $\alpha$ skaliert werden.

$$\kappa_x = \alpha/(y_x^{\max} - y_x^{\min}), \quad \alpha > 1 \qquad (25)$$

Simulationen zeigen, dass ein Wert von $\alpha = 10$ gute Resultate für die vorliegende Anwendung ergibt.

Mit dem Hinzufügen von Zustandsbeschränkungen können nicht machbare Kombinationen von Beschränkungen auftreten. In einem derartigen Fall wird die Iteration angehalten, und die Lösung aus dem letzten Iterationsschritt wird angewandt.

Der große Vorteil des vorgeschlagenen Ansatzes ist, dass er nur eine kleine und begrenzte Anzahl von Iterationen erfordert, wodurch die Echtzeit-Implementierung erleichtert wird. Ein ähnlicher Ansatz ist beschrieben in [Y. Wang und S. Boyd, "Fast model predictive control using online optimization," Control Systems Technology, IEEE Transactions on, vol. 18, no. 2, S. 267 -278, 2010], wo ausführliche numerische Experimente zeigen, dass sich ein überraschend gutes Regelgesetz mit einem vorzeitigen Abbruch nach einigen wenigen Iterationen erzielen lässt. Die Rechenzeit kann über die Vorberechnung der inversen Hesse-Matrix H und über die Verwendung eines Rang-1-Updates für die Matrixinversion in (19) reduziert werden. Eine weitere Reduzierung der durchschnittlichen Rechenzeit lässt sich erreichen, indem der Algorithmus angehalten wird, sobald die Zunahme der ersten Regelgröße durch eine Beschränkung im Active Set festgelegt ist.

Die Auswirkungen und Vorteile eines Zustandsbeobachters und der Referenzfilterung werden jetzt erläutert. Mit der gewählten MPC-Formulierung ist trotz fehlender Übereinstimmung mit dem Anlagenmodell oder nicht gemessenen Störungen eine Erfassung ohne bleibenden Regelfehler möglich. In [U. Maeder, F. Borrelli und M. Morari, "Linear offset-free model predictive control," Automatica, vol. 45, no. 10, S. 2214 - 2222, 2009] wird gezeigt, dass dies über die Verwendung eines Beobachters erzielt wird, sodass der aktuelle Zustandsvektor statt des tatsächlichen vorangegangenen Controllerausgangs $Uk$-1 einen geschätzten Wert $\hat{U}k$-1 aufweist. Weiter kann der Beobachter den vollständigen Zustandsvektor bereitstellen, auch wenn nicht alle Zustandsgrößen direkt gemessen werden können. Ein Referenz-Vorfilter wird verwendet, um bei jeder Abtastung einen machbaren Referenz-Trajektorievektor $R_{s,k} = [r_{s,k,1} \dots r_{s,k}, N_p]$ aus der skalaren Referenz $rk$ zu erzeugen. Das Filter verzögert die Trajektorie um zwei Abtastschritte, um die Rechenverzögerung und die Tiefpasscharakteristik des Systems zu berücksichtigen. Es begrenzt auch die Änderungsrate der

Trajektorie auf $\left| r_{s,k,i} - r_{s,k,i-1} \right| \leq \Delta r_s^{\max}$.

Die bislang beschriebene MPC gilt nur für Lasten mit konstanten Parametern. Die Filterkapazität der Last ist bekannt oder messbar, und sie ändert sich während des Betriebs nicht. Mit konstanter Lastleistung ändert sich der Parameter $R2$ jedoch über $v2$ und $P$ gemäß (2). Als möglicher Ansatz wird zur Lösung dieses Regelproblems ein Robustheitskonzept gewählt. Für das Systemmodell (6) lassen sich zwei Extremfälle angeben. Erstens wird für $P = 0$ der unsichere Parameter $g_p^{\max} = 0$. Zweitens nimmt der unsichere Parameter für den höchsten Strombedarf $P^{\max}$ bei der für den Wechselrichter angegebenen niedrigsten Eingangsspannung $v$min 2 den Wert $g_p^{\min} = -P^{\max} / (v_2^{\min})^2$.

an. Für die beiden extremen Fälle kann man zwei prädiktive Modelle in der Form von (7) aufstellen, die durch $\{A_d(0),$ $B_d(0), C_d(0)\}$ mit dem Zustandsvektor x$_{d1k}$ und durch $\left\{ A_d(g_p^{\min}), B_d(g_p^{\min}), C_d(g_p^{\min}) \right\}$ dem Zustandsvektor x$_{d2k}$ bezeichnet sind. Die grundlegende Idee ist die Verwendung beider Modelle zur Prognose, um eine Sequenz von Regelvorgängen zu finden, die die tatsächliche Anlage einerseits korrekt regelt und die andererseits beide extremen Anlagenmodelle stabilisiert. Dies wird erreicht, indem auf beide Modelle die gleiche Sequenz von Regelgrößen angewandt und die Summe der beiden Ausgaben mit $\varphi_1$ bzw. $\varphi_2$ gewichtet als geregelte Ausgabe entsprechend der Darstellung in Fig. 8 genommen wird.

Dies kann über die Verwendung des MPC-Algorithmus aus Abschnitt **??** und die entsprechende Einrichtung des erweiterten Modells implementiert werden:

$$\boldsymbol{x}_{k+1} = \begin{bmatrix} \boldsymbol{A}_d(0) & \boldsymbol{0} & \boldsymbol{B}_d(0) \\ \boldsymbol{0} & \boldsymbol{A}_d(g_p^{\min}) & \boldsymbol{B}_d(g_p^{\min}) \\ \boldsymbol{0} & \boldsymbol{0} & 1 \end{bmatrix} \boldsymbol{x}_k + \begin{bmatrix} \boldsymbol{0} \\ \boldsymbol{0} \\ 1 \end{bmatrix} \Delta u_k$$

$$y_k = \begin{bmatrix} \varphi_1 \boldsymbol{C}_d^y & \varphi_2 \boldsymbol{C}_d^y & 0 \end{bmatrix} \boldsymbol{x}_k \tag{26}$$

wobei der Zustandsvektor als $\boldsymbol{x}_k = \begin{bmatrix} \boldsymbol{x}_{d1k}^T & \boldsymbol{x}_{d2k}^T & u_{k-1} \end{bmatrix}^T$ gewählt wird.

Der Beobachterentwurf erfordert, dass beide Modelle über einen erweiterten Ausgangsvektor

$$\tilde{z}_k = \begin{bmatrix} C_d(0) & 0 & 0 \\ 0 & C_d(g_p^{\min}) & 0 \end{bmatrix} \boldsymbol{x}_k \tag{27}$$

beobachtbar sein müssen:

In der Praxis sind nur Messungen $z_k^T$ von der tatsächlichen Anlage verfügbar. Diese müssen dupliziert werden , sodass $\tilde{z}_k = \begin{bmatrix} z_k^T & z_k^T \end{bmatrix}^T$ gilt, damit der vollständige Ausgangsvektor für den Beobachter erhalten wird.

Falls der zuvor unbekannte Parameter $g$p gemessen oder geschätzt werden kann, lässt sich die Performance mit einem Scheduling-Regler verbessern. Die Systembeschreibung (7) hat einen einzelnen Parameter $g_p$, der zur Auswahl der Parametersätze gewählt wird. Für eine repräsentative Gruppe von Werten

$$g_p^{\min} \leq g_{p,i} \leq g_p^{\max}, \quad \forall i \in \mathbb{N} \leq N_g \tag{28}$$

die den erwarteten Betriebsbereich gleichmäßig abdecken, werden lokale MPC-Parametrierungen erhalten. Die entsprechenden Parametersätze $\{\phi i, \boldsymbol{H} i, \boldsymbol{F} i\}$ werden offline berechnet. Zur Laufzeit muss ein Scheduler dann nur den Parametersatz auswählen, für den gilt

$$i = \min_j \left| g_{p,j} - g_p \right|.$$

Dieses Regler-Schema ist in Fig. 9 dargestellt. Je höher die Anzahl $N_g$ lokaler Parametergruppen ist, desto glatter ist die Reaktion des Systems. Die Anzahl der Parametergruppen wirkt sich nur auf das erforderliche Speichervolumen für die Speicherung der Parameter aus; er erhöht nicht die Komplexität von Online-Berechnungen. Die Implementierung dieses Schemas zur Erzielung eines reibungslosen Übergangs zwischen den Parametergruppen erfordert sorgfältiges Vorgehen. Das anfängliche System (7) weist die kombinierte Störung und den Offset-Zustand $w_k = i_{2,k}^0 - v_{2,k}^0 g_P$ auf, sodass sich die Bedeutung des Zustandsvektors nach dem Parameter $g_p$ richtet. Der gleiche physische Zustand würde zu einem unterschiedlichen Wert von $wk$ für jede lokalen MPC-Parametersatz führen.

Dieses Problem wird abgemildert über die Auswahl eines erweiterten zeitdiskreten Modells

$$\tilde{x}_{\mathrm{d}k+1} = \bar{A}_{\mathrm{d}}(g_{\mathrm{p}}) \cdot \tilde{x}_{\mathrm{d}k} + \bar{B}_{\mathrm{d}}(g_{\mathrm{p}}) \cdot u_k$$

$$y_k = \bar{C}_{\mathrm{d}}^y \cdot x_{\mathrm{d}k} \tag{29}$$

mit dem Zustandsvektor

$$\tilde{x}_{\mathrm{d}k} = \begin{bmatrix} i_{1,k} & v_{2,k} & i_{2,k}^0 & v_{2,k}^0 \end{bmatrix}^{\mathrm{T}} \tag{30}$$

für den die Beziehung zwischen den Zustandsvariablen und dem physischen Zustand von der Planungsgröße unabhängig ist. Das erweiterte prädiktive Modell für die MPC wird anschließend definiert als

$$\tilde{x}_{k+1} = \underbrace{\begin{bmatrix} \bar{A}_{\mathrm{d}}(g_{\mathrm{p}}) & \bar{B}_{\mathrm{d}}(g_{\mathrm{p}}) \\ 0 & 1 \end{bmatrix}}_{A(g_{\mathrm{p}})} \tilde{x}_k + \underbrace{\begin{bmatrix} 0 \\ 1 \end{bmatrix}}_{B} \Delta u_k$$

$$y_k = \underbrace{\begin{bmatrix} \bar{C}_{\mathrm{d}}^y & 0 \end{bmatrix}}_{C} \tilde{x}_k \tag{31}$$

mit dem erweiterten Zustandsvektor

$$\tilde{x}_k = \begin{bmatrix} \tilde{x}_{\mathrm{d}k}^{\mathrm{T}} & u_{k-1} \end{bmatrix}^{\mathrm{T}}. \tag{32}$$

Die Matrizen $A(g_p,i),B,C$ werden verwendet, um die entsprechenden Gruppen $\{\phi i, Hi, Fi\}$ aus (12), (18) zu finden. Für jede Abtastung des Reglers sind die Zustände $v2, k$ und $v_{2,k}^0$ gleich. Innerhalb des Prädiktionshorizonts der MPC ändert sich jedoch nur $v_{2,k+2}|k$, während $v_{2,k+i|k}^0$ für alle $i \in \mathrm{N} \le N_p$ konstant bleibt. Wegen der vorstehend erfolgten Wahl des Zustandsvektors kann der Zustand unabhängig vom Parameter $g_p$ geschätzt werden, sodass für den gesamten Betriebsbereich der gleiche Beobachter eingesetzt werden kann. Durch die Wahl von $g_p = 0$ wird der Einfluss der Last als eine Störung $w_k = i_{2,k}^0 - v_{2,k}^0 \cdot 0 = i_{2,k}^0$ behandelt.

Der Zustandsbeobachter ist somit für das folgende nominelle Modell konzipiert:

$$\hat{x}_{k+1} = \begin{bmatrix} A_\mathrm{d}(0) & B_\mathrm{d}(0) \\ 0 & 1 \end{bmatrix} \hat{x}_k + B_\mathrm{d}(0)\Delta u_k$$

$$z_k = \begin{bmatrix} C_\mathrm{d}(0) & 0 \end{bmatrix} \hat{x}_k, \quad \hat{x}_k = \begin{bmatrix} \hat{x}_{\mathrm{d}k} \\ \hat{u}_{k-1} \end{bmatrix} \tag{33}$$

Der geschätzte Zustandsvektor $\hat{x}_k$ wird erweitert durch $\hat{v}_{2,k}^0 = C_\mathrm{d}^v \hat{x}_{\mathrm{d}k}$, sodass er für die Scheduling-MPC verwendet werden kann:

$$\tilde{x}_k = \begin{bmatrix} \hat{x}_{\mathrm{d}k}^\mathrm{T} & \hat{v}_{2,k}^0 & \hat{u}_{k-1} \end{bmatrix}^\mathrm{T} \tag{34}$$

Da $g_p$ nicht direkt gemessen werden kann, wird der Beobachter auch eingesetzt, um einen Schätzwert $\hat{g}_{pk}$ des Parameters aus (4) zu erhalten, sodass gilt

$$\hat{g}_{\mathrm{p}k} = -\frac{\hat{i}_{2,k}^0}{\hat{v}_{2,k}^0}. \tag{35}$$

Die unvermittelte Parameterumschaltung kann eine unerwünschte Erregung des Systems während Transienten verursachen. Grenzzyklen können auftreten, wenn der Betriebspunkt im stationären Zustand genau in der Mitte von zwei unterstützenden Punkten liegt und der Scheduler konstant zwischen ihnen schaltet. Erweiterte Schedulingverfahren wie Parameterüberblendung oder Überblendung der Reglerausgänge könnten zu einer verbesserten Performance führen [G. Gregorcic und G. Lightbody, "Nonlinear model-based control of highly nonlinear processes," Computers & Chemical Engineering, vol. 34, no. 8, S. 1268 - 1281, 2010].

Die in dieser Erfindung vorgeschlagenen Regler-Konzepte wurden sowohl mit Simulationen sowie experimentell mit einem 60-kW-Batterieemulator überprüft. Die Parameter des Testsystems sind in Tabelle 1 aufgelistet. Der PWM-Modulator des Testsystems hatte ein Tiefpassfilter an seinem Eingang, der zum Wechselrichtermodell (1) hinzugefügt werden musste.

Tabelle 1: Systemparameter

| Parameter | Nominalwert | Beschreibung |
|---|---|---|
| $C_0$ | 20 000$\mu$F | Zwischenkreiskapazität |
| $U_0$ | 620 V | Zwischenkreisspannung |
| $L_1$ | 1/3-1800 $\mu$H | konzentrierte Speicherinduktanz |
| $R_1$ | 1/3.8 m$\Omega$ | konzentrierter Induktionswiderstand |
| $C_1$ | 450 $\mu$F | Filterkapazität |
| $C_2$ | 20 000 $\mu$F | Lasteingangskapazität |
| fsw | 2,5 kHz | Schaltfrequenz |
| fs | 7,5 kHz | Abtastrate |

Die Simulationen wurden unter Verwendung eines detaillierten Modells der BE-Ausgangsstufe mit drei versetzten schaltenden Phasen durchgeführt. Die simulierte Last wurde als ideale CPL für Spannungen größer als 150 V modelliert. Für geringere Spannungen schaltet die simulierte Last auf konstantes Stromverhalten.

Im Simulationsmodell wurde $C2 = 0$ $\mu$F für die Filterkapazität gewählt, um die Wirksamkeit der vorgeschlagenen Ansätze auch in schlechtesten Situationen zu zeigen. Simulationen wurden unter Verwendung einer konventionellen MPC ohne CPL-Modell, des vorgeschlagenen Scheduling-Reglers und des vorgeschlagenen robusten Reglers durchgeführt. Der robuste Controller wurde für einen maximalen Strombedarf von Pmax = 60 kW bei $v_2^{\min} = 245$ V konzipiert,

sodass $g_p^{imax} = 0$ und $g_p^{min} = -1\,\Omega^{-1}$ gelten.

Die Wahl eines breiteren Bereichs würde zu höherer Robustheit, aber auch zu einer langsameren Reaktion führen. Mit dem Scheduling-Ansatz lässt sich ein breiterer Parameterbereich abdecken, ohne die Regelungsperformance (Closed-Loop-Performance) zu beeinträchtigen. Lediglich der höhere Speicherbedarf für zusätzliche Parametersätze ist zu berücksichtigen. Mit der Notation $g_p$ = 1/*R2* sind die Systemmatrizen linear abhängig von $g_p$. Dementsprechend wurden 21 Parametersätze gleichmäßig zwischen $g_p^{imax} = 0$, und $g_p^{min} = -4\,\Omega^{-1}$ platziert, sodass die sich ergebenden lokalen Regler in einem Abstand von 0,05 $\Omega^{-1}$ platziert sind.

Fig. 10 zeigt Simulationsergebnisse von anfänglich 0 V ohne Last bis zu einem Sollwert von 320 V und einem plötzlichen Lastschritt von 0 kW auf 60 kW, während die Referenzspannung konstant gehalten wird. Bei Last null verwenden sowohl der nominelle Regler als auch der Scheduling-Regler die gleiche Parametergruppe, sodass ihr Start für die ersten 5 ms identisch ist. Nach dem Lastschritt bei 5 ms passt sich der nominelle Regler nicht an die geänderte Anlagendynamik an, und die Regelschleife wird instabil, während der Scheduling-Regler stabil bleibt. Trotz eines ersten großen Abfalls der Ausgangsspannung kann der Controller durch optimierte Nutzung des verfügbaren Stellgrößenbereichs die Spannung praktisch ohne Überschwingen rasch wiederherstellen. Bei der Variante des robusten Reglers bleibt die Regelschleife ebenfalls stabil, doch sie verursacht ein Übersschwingen, und die erforderliche Rückkehrzeit nach der Störung ist länger. Da der robuste Regler die Regelgröße vorsichtiger verwendet, benötigt er auch mehr Zeit, um in der Startphase den Sollwert zu erreichen. Nach 10 ms wird ein Referenzschritt von 320 V bis 270 V beaufschlagt, um die Führungsregelung und die Fähigkeit zum Umgang mit Änderungen des Betriebspunkts zu zeigen. Beide vorgeschlagenen Regler zeigen ein ähnliches Verhalten mit kurzer Anstiegszeit und schneller Einregelung.

Für die experimentellen Tests wurden die Regelalgorithmen auf einer dSpace MicroAutoBox unter Verwendung von MATLAB zur automatischen Codeerzeugung implementiert. Die dSpace-Plattform weist einen mit 800 MHz getakteten Prozessor IBM PPC 750FX auf. Schrittänderungen der Referenzspannung ohne Last sind in Fig. 11 gezeigt, die die Wirksamkeit der Optimierung mit Beschränkungen darstellt. Bei einem kleineren Referenzschritt lässt sich der Sollwert sehr schnell erreichen. Der Controller verwendet eine große Zunahme der Regelgröße im ersten Zeitpunkt, reduziert die Regelgröße zu den anschließenden Zeitpunkten aber auf ihre untere Grenze. Nach weniger als 0,8 ms ist der Sollwert erreicht, und die Einschaltdauer ist auf den neuen Wert ihres stationären Zustands eingestellt. Wie ersichtlich ist, folgt der Drosselstrom einer dreieckförmigen Trajektorie. Bei einem größeren Referenzschritt verwendet der Controller während der beiden ersten Abtastungen vollständig die obere Grenze der Einschaltdauer. Der Controller folgt anschließend der Referenztrajektorie, bis der neue Sollwert erreicht ist.

Der gleiche große Referenzschritt wurde entsprechend der Darstellung in Fig. 12 mit einem reduzierten Grenzwert des Induktorstroms von $\pm 200$ A und einer konstanten Stromaufnahme von 100 A wiederholt, um die Aktivierung der Drosselstrombegrenzungzu zeigen. Der Drosselstrom ist während der Transienten auf seine obere Grenze beschränkt, sodass die Ausgangsspannung nur langsam ansteigen kann.

Zu Testzwecken wurde der Wechselrichter einer dreiphasigen unterbrechungsfreien Spannungsversorgung (USV) mit einer Maximalleistung von 24 kW und Zwischenkreiskapazität von C2 = 20000 $\mu$F mit dem BE verbunden. AC-seitig war er eingestellt, um eine konstante Spannung über einen Dreiphasenwiderstand zu regeln, sodass er dem BE gegenüber als Konstantleistungslast auftrat. Ergebnisse für eine Sequenz von sprungförmigen Änderungen der Referenzspannung unter Verwendung des Scheduling-Reglers und des robusten Reglers sind in Fig. 13 wiedergegeben. Es ist ersichtlich, dass der Laststrom bei steigender Ausgangsspannung abnimmt und umgekehrt bei fallender Ausgangsspannung zunimmt, wie es bei einer Konstantleistungslast zu erwarten ist. Während der Transienten verursachte die Ladung und Entladung des großen Zwischenkreiskondensators des Wechselrichters große Stromspitzen. Diese waren jedoch durch die Drosselstrombegrenzung auf $\pm 300$ A begrenzt. Nur der Scheduling-Regler verletzt für einen kurzen Moment geringfügig den unteren Grenzwert.

Laststörungen wurden durch abruptes Schalten der AC-seitigen Widerstände des Wechselrichters getestet. Die Resultate sind in Fig. 14 wiedergegeben.

**Patentansprüche**

1. Verfahren zur Prüfung eines Antriebssystems für zumindest teilweise elektrisch angetriebene Fahrzeuge, bei welchem die dem Antriebssystem zugeführte Spannung mittels eines Simulationssystem für das Energiespeichersystem und einem damit gekoppelten Regelkreis in einer Weise geregelt wird, dass sich die Spannung dynamisch entsprechend einem realen Energiespeichersystem verhält, wobei der Regelkreis mittels eines modellbasierten Reglerentwurfsverfahrens als modellprädiktive Regelung erstellt wird, bei welchem in ein zeitdiskretes Modell der Regelstrecke ein Lastmodell des Antriebssystems eingebunden ist und mit der modellprädiktiven Regelung für jeden Zeitpunkt (k) eine optimierte Sequenz von Regelvorgängen ($\Delta u_k$) bestimmt wird, **dadurch gekennzeichnet, dass** das Modell in seinem Parametersatz einen Parameter ($g_p$) enthält, der über den Betriebsbereich veränderlich ist, und über den Betriebsbereich verteilt eine Anzahl (i) von Parametersätze mit Parameter ($g_{p,i}$) berechnet werden und für die Bestimmung der Sequenz von Regelvorgängen ($\Delta u_k$) der Parametersatz mit Parameter ($g_{p,i}$) ausgewählt wird, der dem tatsächlichen Parameter ($g_p$) am nächsten kommt..

**2.** Verfahren nach Anspruch 1, **dadurch gekennzeichnet, dass** die Ausgangsspannung gemessen, der Leistungsbedarf des Antriebssystems geschätzt und die Parameter des Lastmodells in Abhängigkeit von dieser Ausgangsspannung und des geschätzten Leistungsbedarfs verändert werden, wobei vorzugsweise zwischen kompletten Parametersätzen umgeschaltet wird.

**3.** Verfahren nach Anspruch 2, **dadurch gekennzeichnet, dass** Schätzung des Leistungsbedarfs mit einem Beobachter erfolgt, basierend auf dem gemessenen Laststrom.

**4.** Vorrichtung zur Prüfung eines Antriebssystems für zumindest teilweise elektrisch angetriebene Fahrzeuge, mit einem Simulationssystem für das Energiespeichersystem, sowie mit einem mit dem Simulationssystem gekoppelten Regelkreis geeignet für die Regelung der dem Antriebssystem zugeführte Spannung in einer Weise, dass diese sich dynamisch entsprechend einem realen Energiespeichersystem verhält, wobei im Regelkreis eine modellbasierte Regelung als modellprädiktive Regelung realisiert und in dessen Modell der Regelstrecke ein Lastmodell des Antriebssystems eingebunden ist und die modellprädiktive Regelung für jeden Zeitpunkt (k) eine optimierte Sequenz von Regelvorgängen ($\Delta u_k$) bestimmt, **dadurch gekennzeichnet, dass** das Modell in seinem Parametersatz einen Parameter ($g_p$) enthält, der über den Betriebsbereich veränderlich ist, und die Regelung für die Bestimmung der Sequenz von Regelvorgängen ($\Delta u_k$) aus einer Anzahl (i) von berechneten, über den Betriebsbereich verteilten Parametersätze mit Parameter ($g_{p,i}$) den Parametersatz mit Parameter ($g_{p,i}$) ausgewählt, der dem tatsächlichen Parameter ($g_p$) am nächsten kommt.

**5.** Vorrichtung nach Anspruch 4, **dadurch gekennzeichnet, dass** ein vom Leistungsbedarf der Last abhängiges Modell eingebunden ist.

**6.** Vorrichtung nach Anspruch 4 oder 5, **dadurch gekennzeichnet, dass** ein von der Ausgangsspannung des Energiespeichersystems abhängiges Modell eingebunden ist.

## Claims

**1.** Process for testing the powertrain of vehicles that are at least in part electrically driven, whereby the voltage supplied to the powertrain is controlled by a controller coupled with a simulation system for the energy storage system in a manner that the voltage acts dynamically as for a real energy storage system, whereat the controller is designed with a model based controller design method as model predictive control, whereby a load model of the powertrain being used in the discrete time model of the controlled system and at each time instant (k) an optimal sequence of control moves ($\Delta u_k$) is determined, **characterized in that** the model has a parameter ($g_p$) in its parameter set that is variable over the operating range and **in that** a number (i) of parameter sets with parameter ($g_{p,i}$) is calculated over the operating range and the parameter set with parameter ($g_{p,i}$) which is closest to the actual parameter ($g_p$) is chosen for determining the sequence of control moves ($\Delta uk$).

**2.** Process according to claim 1, **characterized in that** the output voltage is measured, the power demand of the powertrain is estimated and the parameters of the load model are modified in dependence of the output voltage and the estimated load demand, preferably by switching between complete sets of parameters.

**3.** Process according to 2, **characterized in that** the estimation of the load demand is accomplished with an observer system, based on the measured load current.

**4.** Device for testing of a powertrain of vehicles that are at least in part electrically driven, with a simulation system for the energy storage system, and with a controller that is coupled with the simulation system and suited for controlling the voltage supplied to the powertrain in a manner that said voltage acts dynamically as for a real storage system, whereat a model based controller as model predictive control is realized in the controlled system and a load model of the powertrain is integrated in the model of the controlled system and at each time instant (k) an optimal sequence of control moves ($\Delta u_k$) is determined by the model predictive control, **characterized in that** the model has a parameter ($g_p$) in its parameter set that is variable over the operating range and **in that** the control chooses the parameter set with parameter ($g_{p,i}$) which is closest to the actual parameter ($g_p$) from a number (i) of calculated and over the operating range allocated parameter sets with parameter ($g_{p,i}$) for determining the sequence of control moves ($\Delta u_k$).

**5.** Device according to claim 4, **characterized in that** a load power demand dependent model is integrated.

**6.** Device according to claims 4 or 5, **characterized in that** a model is integrated that depends on the output voltage of the energy storage system.

**Revendications**

**1.** Procédé de contrôle d'un système de de propulsion pour véhicules à propulsion au moins partiellement électrique, dans lequel la tension acheminée au système de propulsion est réglée au moyen d'un système de simulation pour le système accumulateur d'énergie et d'une boucle de réglage couplée à celui-ci de manière à ce que la tension réagisse dynamiquement en fonction d'un système accumulateur d'énergie réel, la boucle de réglage étant établie au moyen d'un procédé projeteur de réglage basé sur modèle sous forme d'un réglage à modèle prédictif dans lequel, dans un modèle à temps discret de la distance de réglage, un modèle de charge du système de propulsion est intégré et, grâce au réglage à modèle prédictif, pour chaque moment (k), une séquence optimisée de processus de réglage ($\Delta U_k$) est définie, **caractérisé en ce que** le modèle contient dans son ensemble de paramètres un paramètre ($g_p$) qui est variable sur la plage de fonctionnement et que, répartis sur la plage de fonctionnement, un certain nombre (i) d'ensembles de paramètres contenant le paramètre ($g_{p,i}$) sont calculés et que, pour la définition de la séquence de processus de réglage ($\Delta U_k$), l'ensemble de paramètres contenant le paramètre ($g_{p,i}$) et qui se rapproche le plus du paramètre réel ($g_p$) est sélectionné.

**2.** Procédé selon la revendication 1, **caractérisé en ce que** la tension de sortie est mesurée, le besoin en puissance du système de propulsion est estimé et les paramètres du modèle de charge sont modifiés en fonction de cette tension de sortie et du besoin en puissance estimé, sachant qu'on permute de préférence entre des ensembles de paramètres complets.

**3.** Procédé selon la revendication 2, **caractérisé en ce que** l'estimation du besoin en puissance est réalisée avec un observateur en se basant sur le courant de charge mesuré.

**4.** Dispositif de contrôle d'un système de propulsion pour véhicules à propulsion au moins partiellement électrique, comportant un système de simulation pour le système accumulateur d'énergie ainsi qu'une boucle de réglage couplée au système de simulation et convenant pour le réglage de la tension acheminée au système de propulsion de manière à ce que celle-ci réagisse dynamiquement en fonction d'un système accumulateur d'énergie réel, sachant que, dans la boucle de réglage, un réglage basé sur modèle est réalisé sous forme de réglage à modèle prédictif, et dans lequel modèle de distance de réglage un modèle de charge du système de propulsion est intégré et le réglage à modèle prédictif définit pour chaque moment (k) une séquence optimisée de processus de réglage ($\Delta U_k$), **caractérisé en ce que** le modèle contient dans son ensemble de paramètres un paramètre ($g_p$) qui est variable sur la plage de fonctionnement et que le réglage pour la définition de la séquence de processus de réglage ($\Delta U_k$) est sélectionné dans un certain nombre (i) d'ensembles de paramètres calculés répartis sur la plage de fonctionnement et contenant le paramètre ($g_{p,i}$) qui se rapproche le plus du paramètre réel ($g_p$).

**5.** Dispositif selon la revendication 4, **caractérisé en ce qu'**un modèle dépendant du besoin en puissance de la charge est intégré.

**6.** Dispositif selon la revendication 4 ou 5, **caractérisé en ce qu'**un modèle dépendant de la tension de sortie du système accumulateur d'énergie est intégré.

Fig. 1

$$\frac{\Delta v_2}{\Delta \overline{i}_2} = R_2 < 0$$

$$P = v_2 \cdot \overline{i}_2 = \text{const.}$$

(a)

(b)

$$P = v_2 \cdot \overline{i}_2$$

(c)

Fig. 3

Fig. 2

Abtastung
$f_s = 7,5$ kHz

Regelgröße

$u_k$ → $\boxed{\dfrac{1}{V_0}}$ → $d_k$

Batterieemulator

$d$ → Tiefpass → $\boxed{V_0}$ → $v_1$

$f_g = 3,2$ kHz

PWM

$i_2$

$i_1$ — $L_1$ — $i_2$

$\downarrow v_1$   $C_1$   $\downarrow v_2$

Ausgangsfilter

$i_2$

$v_2 \downarrow$   $C_2$   $P$

Last

$i_2$

Messgrößen

$i_{1,k}$ ← $i_1$

$v_{2,k}$ ← $v_2$

$i_{2,k}$ ← $i_2$

**Fig. 4**

$r_k$ → Referenzfilter → $R_{s,k}$

$i_{1,k}$
$v_{2,k}$   $z_k$ → Beobachter → $\hat{x}_k$
$i_{2,k}$

MPC → $\Delta u_k$ → $\boxed{\dfrac{q}{q-1}}$ → $u_k$

$\Delta u_{k-1}$   $\boxed{\dfrac{1}{q}}$

**Fig. 5**

Fig. 6

Fig. 7

Fig. 8

Fig. 9

(a) Nomineller Regler

(b) Scheduling Regler

(c) Robuster Regler

Fig. 10

(a) Kleiner Spannungssprung von 50V auf 150V

(b) Großer Spannungssprung von 50V auf 150V

## Fig. 11

Fig. 12

EP 2 855 193 B1

(a) Scheduling Regler

Fig. 13

(b)  Robuster Regler

# Fig. 13

(a) Scheduling Regler

# Fig. 14

(b)  Robuster  Regler

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. KONIG et al.** *IEEE Vehicle power and propulsion conference,* 2011, ISBN 978-1-61284-6, 1-6
- B#: a battery emulator and power profiling instrument. **P. H. CHOU ; C. PARK ; J. PARK ; K. PHAM ; J. LIU.** ISLPED '03: Proceedings of the 2003 international symposium on Low power electronics and design. ACM, 2003, 288-293
- The development of solid oxide fuel cell (sofc) emulator. **A. GEBREGERGIS ; P. PILLAY.** Power Electronics Specialists Conference, 2007. IEEE, 2007, vol. 17-21, 1232-1238
- **M. C. DI PIAZZA ; G. VITALE.** Photovoltaic field emulation including dynamic and partial shadow conditions. *Applied Energy,* 2010, vol. 87 (3), 814-823
- Specialized battery emulator for automotive electrical systems. **T. BAUMHÖFER ; W. WAAG ; D. SAUER.** Vehicle Power and Propulsion Conference (VPPC). IEEE, September 2010, 1-4
- Dynamics of a buck converter with a constant power load. **V. GRIGORE ; J. HATONEN ; J. KYYRA ; T. SUNTIO.** Power Electronics Specialists Conference, 1998. IEEE, 1998, vol. 1, 72-78
- **B. CHOI ; B. CHO ; S.-S. HONG.** Dynamics and control of dc-to-dc converters driving other converters downstream. *Circuits and Systems I: Fundamental Theory and Applications, IEEE Transactions,* Oktober 1999, vol. 46 (10), 1240-1248
- **J. CIEZKI ; R. ASHTON.** The application of feedback linearization techniques to the stabilization of dc-to-dc converters with constant power loads. *Circuits and Systems, 1998. ISCAS '98. Proceedings of the 1998 IEEE International Symposium,* 03. Mai 1998, vol. 3, 526-529
- **A. EMADI ; M. EHSANI.** Negative impedance stabilizing controls for pwm dc-dc converters using feedback linearization techniques. *Energy Conversion Engineering Conference and Exhibit, 2000. (IECEC) 35th Intersociety,* 2000, vol. 1, 613-620
- **A. EMADI ; A. KHALIGH ; C. RIVETTA ; G. WILLIAMSON.** Constant power loads and negative impedance instability in automotive systems: definition, modeling, stability, and control of power electronic converters and motor drives. *Vehicular Technology, IEEE Transactions,* Juli 2006, vol. 5 (4), 1112-1125

- Passivity-based control of buck converters with constant-power loads. **A. KWASINSKI ; P. KREIN.** Power Electronics Specialists Conference, 2007. PESC 2007. IEEE, 2007, 259-265
- **A. RAHIMI ; A. EMADI.** Active damping in dc/dc power electronic converters: A novel method to overcome the problems of constant power loads. *Industrial Electronics, IEEE Transactions,* Mai 2009, vol. 56 (5), 1428-1439
- **M. ZIMA ; G. ANDERSSON.** Model predictive control employing trajectory sensitivities for power systems applications. *Decision and Control, 2005 and 2005 European Control Conference. CDC-ECC '05. 44th IEEE Conference,* 2005, 4452-4456
- State-feedback-withintegral control plus repetitive control for UPS inverters. **K. ZHANG ; L. PENG ; Y. KANG ; J. XIONG.** Twentieth Annual IEEE Applied Power Electronics Conference and Exposition, 2005. APEC 2005. IEEE, 2005, 553-559
- **T. GEYER ; G. PAPAFOTIOU ; M. MORARI.** On the optimal control of switch-mode dc-dc converters. *Hybrid Systems: Computation and Control,* 2004, 77-85
- **T. GEYER ; G. PAPAFOTIOU ; R. FRASCA ; M. MORARI.** Constrained optimal control of the step-down dc-dc converter. *Power Electronics, IEEE Transactions,* September 2008, vol. 23 (5), 2454-2464
- **A. BEMPORAD ; F. BORRELLI ; M. MORARI.** Model predictive control based on linear programming the explicit solution. *Automatic Control, IEEE Transactions,* 2002, vol. 47 (12), 1974-1985
- **A. WILLS ; D. BATES ; A. FLEMING ; B. NINNESS ; R. MOHEIMANI.** Application of mpc to an active structure using sampling rates up to 25khz. *Decision and Control, 2005 and 2005 European Control Conference. CDC-ECC '05. 44th IEEE Conference,* 2005, 3176-3181
- **Y. XIE ; R. GHAEMI ; J. SUN ; J. FREUDENBERG.** Implicit model predictive control of a full bridge dc-dc converter. *Power Electronics, IEEE Transactions,* 2009, vol. 24 (12), 2704-2713
- **J. BONILLA ; R. DE KEYSER ; M. DIEHL ; J. ESPINOZA.** Fast NMPC of a DC-DC converter: an exact Newton real-time iteration approach. *Proc. of the 7th IFAC Symposium on Nonlinear Control Systems (NOLCOS 2007),* 2007

- **S. RICHTER ; S. MARIETHOZ ; M. MORARI.** High-speed online mpc based on a fast gradient method applied to power converter control. *American Control Conference (ACC), 2010,* Juli 2010, 4737-4743
- **S. RICHTER ; C. JONES ; M. MORARI.** Real-time input-constrained mpc using fast gradient methods. *Decision and Control, 2009 held jointly with the 2009 28th Chinese Control Conference. CDC/CCC 2009. Proceedings of the 48th IEEE Conference,* 2009, 7387-7393
- **R. MILMAN ; E. DAVISON.** A fast mpc algorithm using nonfeasible active set methods. *Journal of Optimization Theory and Applications,* 2008, vol. 139, 591-616
- **H. J. FERREAU ; H. G. BOCK ; M. DIEHL.** An online active set strategy to overcome the limitations of explicit mpc. *Int. J. Robust Nonlinear Control,* 2008, vol. 18 (8), 816-830
- **Y. WANG ; S. BOYD.** Fast model predictive control using online optimization. *Control Systems Technology, IEEE Transactions,* 2010, vol. 18 (2), 267-278
- **O. KÖNIG ; S. JAKUBEK ; G. PROCHART.** Model predictive control of a battery emulator for testing of hybrid and electric power-trains. *2011 IEEE Vehicle Power and Propulsion Conference (VPPC),* 2011
- **R. W. ERICKSON ; D. MAKSIMOVIC.** Fundamentals of power electronics. Springer, 2001
- Model predictive control of multiphase interleaved dc-dc converters with sensorless current limitation and power balance. **S. MARIETHOZ ; A. BECCUTI ; M. MORARI.** Power Electronics Specialists Conference, 2008. PESC 2008. IEEE, 2008, 1069-1074
- **H. BAE ; J. LEE ; J. YANG ; B. H. CHO.** Digital resistive current (drc) control for the parallel interleaved dc-dc converters. *Power Electronics, IEEE Transactions,* 2008, vol. 23 (5), 2465-2476
- **J. MACIEJOWSKI.** *Predictive control: with constraints,* 2002
- **U. MAEDER ; F. BORRELLI ; M. MORARI.** Linear offset-free model predictive control. *Automatica,* 2009, vol. 45 (10), 2214-2222
- Optimization toolbox 4.3. The Mathworks Inc, 2009
- **Y. WANG ; S. BOYD.** Fast. *Control Systems Technology, IEEE Transactions,* 2010, vol. 18 (2), 267-278
- **G. GREGORCIC ; G. LIGHTBODY.** Nonlinear model-based control of highly nonlinear processes. *Computers & Chemical Engineering,* 2010, vol. 34 (8), 1268-1281